# EUROPÄISCHE PATENTSCHRIFT

(11) **EP 3 581 935 B1**
(45) Veröffentlichungstag und Bekanntmachung des Hinweises auf die Patenterteilung: **26.11.2025**
(21) Anmeldenummer: 18177634.5
(22) Anmeldetag: 13.06.2018
(51) Int. Cl.: G01N 35/00, G06V 20/52, G06V 10/82

(54) **SYSTEM ZUR AUTOMATISCHEN ERKENNUNG VON LABORARBEITSGEGENSTÄNDEN SOWIE VERFAHREN ZUM BETRIEB EINES SYSTEMS ZUR AUTOMATISCHEN ERKENNUNG VON LABORARBEITSGEGENSTÄNDEN**
SYSTEM FOR THE AUTOMATIC RECOGNITION OF LABORATORY WORK OBJECTS AND METHOD OF OPERATING A SYSTEM FOR AUTOMATIC RECOGNITION OF LABORATORY WORK OBJECTS
SYSTÈME DE DÉTECTION AUTOMATIQUE DES OBJETS DE TRAVAIL DE LABORATOIRE AINSI QUE PROCÉDÉ DE FONCTIONNEMENT D'UN SYSTÈME DE DÉTECTION AUTOMATIQUE DES OBJETS DE TRAVAIL DE LABORATOIRE

(43) Veröffentlichungstag der Anmeldung: 18.12.2019
(73) Patentinhaber: Eppendorf SE, 22339 Hamburg (DE)
(72) Erfinder: Pitzer, Alexander, 22339 Hamburg (DE); Tretau, Oliver, 22339 Hamburg (DE); Thieme, Andreas, 22339 Hamburg (DE); Tyss, Karl, 22339 Hamburg (DE); Pohl, Harald, 22339 Hamburg (DE); Voß, David, 22339 Hamburg (DE)
(74) Vertreter: Schwarz, Claudia

(56) Entgegenhaltungen:
- EP-A1- 3 223 019
- DE-A1- 102013 214 694
- US-A1- 2009 317 002
- US-A1- 2010 081 921
- US-A1- 2013 113 929
- YAO HANTAO ET AL: "Coarse-to-Fine Description for Fine-Grained Visual Categorization", IEEE TRANSACTIONS ON IMAGE PROCESSING, IEEE, USA, vol. 25, no. 10, 1 October 2016 (2016-10-01), pages 4858 - 4872, XP011621057, ISSN: 1057-7149, [retrieved on 20160825], DOI: 10.1109/TIP.2016.2599102

## Beschreibung

Die vorliegende Erfindung betrifft ein Verfahren zum Betrieb eines Systems der automatischen Erkennung von Laborarbeitsgegenständen gemäß dem Patentanspruch 1. Ferner betrifft die Erfindung ein System zur automatischen Erkennung von Laborarbeitsgegenständen gemäß dem Anspruch 5

In modernen medizinischen und wissenschaftlichen Laboren werden verschiedene Tätigkeiten, beispielsweise mehr oder weniger komplexe Laborroutinen teils händisch, teils automatisch und teilweise in einer Verknüpfung von händischen und automatischen Tätigkeiten durchgeführt. Selbst bei Laboreinrichtungen, wie beispielsweise Laborrobotern, die komplexe Laborroutinen weitgehend selbstständig durchführen oder abarbeiten können, besteht nach wie vor die Notwendigkeit, dass die Bestückung des Laborautomaten händisch oder von einem Benutzer vorgenommen wird. Dementsprechend sind die Durchführungen solcher Laborroutinen nach wie vor, auch trotz einer bereits Einzug gehaltenen Automatisierung anfällig für Fehler, was wiederum zu nicht vorhandenen oder verfälschten Ergebnissen der entsprechenden Laborroutinen, zumindest aber zu einem erhöhten Zeitaufwand und einem erhöhten Kostenaufwand führt.

Um die Fehleranfälligkeit von händischen und/oder automatischen Arbeitsschritten zur Abarbeitung von Laborroutinen zu verringern, sind aus dem Stand der Technik bereits Verfahren und Systeme bekannt, die eine optische Überwachung der Vorbereitung, Durchführung und Nachbereitung einer von einer Laboreinrichtung durchgeführten Laborroutine überwachen sollen. Dabei dient die optische Überwachung in der Regel zur Fehler- und Störungsvermeidung. Aus dem Stand der Technik sind dazu Systeme und Verfahren bekannt, bei denen für eine entsprechende Laborroutine oder ein Teil oder ein Einzelschritt einer Laborroutine optische Vorgaben, beispielsweise in Form eines Referenzbildes oder einer Referenzabbildung bestehen, die entsprechend mit einem im Rahmen der aktuellen Durchführung oder Abarbeitung der Laborroutine gewonnene Ist-Bild oder Ist-Abbildung verglichen wird, um festzustellen, ob die Laborroutine korrekt abgearbeitet wird. Darüber hinaus sind bereits Verfahren und Systeme bekannt, bei denen mittels klassischer Bildverarbeitung in einer Ist-Abbildung Strukturen, beispielsweise Konturen oder Kanten erkannt werden, um die erkannten Strukturen mit vordefinierten Strukturen oder Referenzstrukturen zu vergleichen und dadurch einen Hinweis auf die korrekte und vollständige Durchführung oder Abarbeitung einer Laborroutine zu erlangen.

Die Vorrichtungen und Verfahren aus dem Stand der Technik haben dabei den Nachteil, dass sie insgesamt sehr unflexibel sind und zu stark von einer wie auch immer gearteten, festen Vorgabe, beispielsweise in Form einer Referenzabbildung, abhängig sind. Dies führt zu dem Problem, dass bei den bekannten Verfahren und Vorrichtungen bereits unterschiedliche Beleuchtungssituationen oder unterschiedliche Lichtverhältnisse einen Vergleich oder einen Abgleich der Ist-Abbildung mit einer Vorgabe oder Referenz schwierig bis unmöglich machen. Außerdem sind die bekannten Verfahren und Vorrichtungen nicht in der Lage, ohne einen fest vorgegebenen und an einen speziellen Punkt einer Laborroutine angeknüpften Auslösemechanismus oder Initialisierungsmechanismus flexibel und dauerhaft oder durchgängig eine entsprechende Laborroutine zu begleiten, um dabei wichtige Informationen hinsichtlich der Durchführung oder Abarbeitung der Laborroutine zu gewinnen und ggf. weiterzuverarbeiten.

Vor diesem Hintergrund stellt sich der vorliegenden Erfindung die Aufgabe, ein verbessertes Verfahren zum Betrieb eines Systems zur automatischen Erkennung von Laborarbeitsgegenständen vorzuschlagen, dass einen flexiblen Einsatz ermöglicht und insbesondere von den Lichtverhältnissen sowie sonstigen Außen- oder Umwelteinflüssen weitestgehend unabhängig erfolgreich durchgeführt werden kann. Dokument EP2013/113929 offenbart ein System und Verfahren zur Verfolgung von chirurgischen Instrumenten in einem Operationssaal. Das System verwendet Kameras, um Instrumente in vordefinierten Bereichen zu erkennen und deren Positionen zu speichern.

Diese Aufgabe wird hinsichtlich des Verfahrens mit den Merkmalen des Anspruchs 1 und hinsichtlich des Systems mit den Merkmalen des Anspruchs 5 gelöst.

Vorteilhafte Weiterbildungen der Erfindung sind in den Unteransprüchen angegeben. In den Rahmen der Erfindung fallen sämtliche Kombinationen aus zumindest zwei in der Beschreibung vorkommenden Ansprüchen und/oder in den Figuren offenbarten Merkmalen.

Die Aufgabe wird dementsprechend gelöst durch Verfahren zum Betrieb eines Systems (1) zur automatischen Erkennung von Laborarbeitsgegenständen und deren Zustand, im Bereich einer Mehrzahl von Sollablagepositionen (2) eines Laborarbeitsbereiches (3) mit den Verfahrensschritten: - Erzeugen einer einzelnen zweidimensionalen Abbildung eines labortechnischen Arbeitsbereichs (3) mit einer Abbildungseinheit (5) zur Erzeugung von zweidimensionalen Abbildungen, wobei der Arbeitsbereich (3) eine matrixförmige Anordnung von Sollablagepositionen (2) umfasst; - Identifizieren zumindest eines ersten Auswertebereichs in der zweidimensionalen Abbildung mit einer Identifizierungseinheit (9) des Systems (1), wobei der zumindest eine Auswertebereich im Bereich einer Sollablageposition (2) des Arbeitsbereichs (3) angeordnet und abgebildet ist;- Aufbereitung der Abbildung, mit einer Aufbereitungseinheit (10) des Systems (1), zu einer Klassifikationsvorstufe hinsichtlich Zuschnitts auf die Abbildung des Auswertebereichs und/ oder Formatierung der Abbildung des Auswertebereichs; - Automatische Gegenstandserkennung auf der Grundlage der Klassifikationsvorstufe unter Anwendung zumindest eines Klassifikationsverfahrens auf der Basis einer Featuregenerierung und einer anschließenden Zuordnung zu einer Gegenstandsklasse mit den durch die Featuregenerierung generierten Features mit einer Klassifizierungseinheit (11) des Systems (1) - Erzeugung eines den erkannten Gegenstand identifizierenden Ausgabesignals mittels einer Ausgabeeinheit, - Übermitteln des Ausgabesignals an eine Laboreinrichtung (4) des Systems (1), mit einer Kommunikationseinheit (8) des Systems (1), und Berücksichtigung des erkannten Gegenstandes bei der Abarbeitung einer Laborroutine der Laboreinrichtung (4), nämlich einer Ansteuerung eines Roboterarms; wobei die Featuregenerierung auf der Basis von händisch erzeugten und/oder maschinell gelernten Auswahlkriterien durch künstliche Neuronale-Netzwerke erfolgt und/oder die Zuordnung der generierten Feature zu einer Gegenstandsklasse auf der Basis von künstlichen Neuronalen-Netzwerken erfolgt; wobei das zumindest eine Klassifikationsverfahren zumindest ein mehrstufiges Klassifikationsverfahren auf der Basis einer zumindest in einer Stufe stattfindenden Faltung der Bildinhalte der Klassifikationsvorstufe mit einem auf die Gegenstandserkennung trainierten Satz von Operatoren, nämlich Faltungsoperatoren, mit einer Neuronalen-Netzwerk-Einheit (111) umfasst; wobei bei Anwendung des mehrstufigen Klassifikationsverfahrens zunächst in den ersten Stufen des künstlichen neuronalen Netzwerkes ein Gegenstand gemäß einer ersten groben Gegenstandsklasse erkannt wird und mit fortschreitenden Stufen jeweils feinere Strukturen durch die jeweilige Stufe erkannt werden und im Anschluss daran mit jeweils nachfolgend durchgeführten Klassifikationsverfahren seitens der Klassifizierungseinheit (11) entsprechend zueinander kaskadierte oder verschachtelte Unterklassen des Gegenstands erkannt werden; wobei die Abbildung Farbinformationen in einzelnen Farbkanälen, und bevorzugt Helligkeitsinformationen in einem Helligkeitskanal, umfasst, wobei im Rahmen der automatischen Gegenstanderkennung zumindest die Farbinformationen der einzelnen Kanäle der Featuregenerierung unterzogen werden, wobei die Kanäle einzeln untersucht und die Ergebnisse der Untersuchung zur Featuregenerierung zusammengefasst werden; wobei die Unterklassen durch die Definition der trainierten Operatoren derart detailliert ausgebildet sind, dass neben dem Gegenstand auch ein Gegenstandszustand erkannt wird; wobei das jeweils nachfolgende Klassifikationsverfahren auf einem kaskadiert oder verschachtelt angeordneten Teilauswertebereich des zumindest einen ersten Auswertebereichs bearbeitet; wobei in einer ersten Stufe des mehrstufigen Klassifikationsverfahrens eine Gegenstandsklasse Spitzenhalter erkannt wird; wobei durch Auswahl eines oder mehrerer Teilauswertebereiche in dem mehrstufiten Klassifikationsverfahren durch die Klassifizierungseinheit erkannt wird, ob und an welchen Positionen des Spitzenhalters Pipettierspitzen angeordnet sind; und wobei in dem mehrstufigen Klassifizeriungsverfahren durch die Klassifizierungeinheit (11) ferner ermittelt wird, in welchen vorhandenen Pipettierspitzen eine Flüssigkeit, welche Flüssigkeit und mit welchem Füllstand befindlich ist.

Der Grundgedanke der Erfindung beruht also auf dem Einsatz von Verfahren zum automatischen erkennen von Eigenschaften (Features) und Zuordnung dieser Eigenschaften oder Features zu einer Gegenstandsklasse einer Gegenstandsklassifikation, wobei die automatische Erkennung durch den Einsatz vorab bereitgestellter intelligenter Operatoren für die Featuregenerierung erreicht wird. Damit kann eine flexible und von einer statischen Referenz oder einem statischen Soll unabhängige Erkennung von Laborgegenständen und deren Zustände zu einem beliebigen Zeitpunkt erfolgen. Dies bedeutet, dass in besonders vorteilhafter Weise für alle Laborgegenstände oder Laborarbeitsgegenstände, für die ein entsprechender Satz von trainierten Operatoren für die Anwendung in dem Klassifikationsverfahren der Klassifizierungseinheit des Systems erzeugt wurde oder vorliegt, eine entsprechende Gegenstandserkennung unabhängig von Lichtverhältnissen oder sonstigen Umwelt- oder Außeneinflüssen jederzeit im Rahmen der Laborroutine durchgeführt und bei der Abarbeitung der Laborroutine berücksichtigt werden kann.

Damit ist das vorgeschlagene Verfahren hochgradig flexibel und auch weitestgehend autark, sodass gerade keine Referenzabbildungen oder sonstigen optischen Soll-Zustände definiert werden müssen, sondern lediglich eine vorgelagerte Ausbildung oder Bereitstellung eines entsprechenden trainierten Satzes von Operatoren (Kernel) sichergestellt werden muss, um in jeder Situation einer Laborroutine unter verschiedensten Umwelt-, insbesondere Lichtverhältnissen die entsprechenden Laborgegenstände zu erkennen.

Dabei hat es sich als besonders vorteilhaft erwiesen, dass die von der Abbildungseinheit optisch erfasste Region (field of view) auf einen Laborarbeitsbereich gerichtet ist und diesen abbildet, indem Sollablagepositionen für entsprechende Laborarbeitsgegenstände angeordnet sind. Bei Laborautomaten können entsprechende Sollablagepositionen eines Laborarbeitsbereichs durch optische und/oder mechanische Mittel gekennzeichnet sein und dienen in der Regel dazu, dass einem Roboterarm oder einer sonstigen Einrichtung eines Laborautomats oder einer vergleichbaren Laboreinrichtung eine Positionierung im Bereich der Sollablageposition ermöglicht oder zumindest erleichtert wird.

Durch die erfindungsgemäße automatische Gegenstandserkennung mit dem Klassifikationsverfahren auf der Basis einer Featuregenerierung und einer anschließenden Zuordnung zu einer Gegenstandsklasse Gegenstandsklasse mit den durch die Featuregenerierung generierten Featureskann zudem besonders vorteilhaft erreicht werden, dass die Abbildungseinheit verhältnismäßig geringe Anforderungen an die Qualität der optischen Abbildung erfüllen muss. So sind mit dem vorgeschlagenen Verfahren auch zuverlässige Gegenstanderkennungen möglich, selbst wenn lediglich Abbildungseinheiten aus dem Verbraucher- oder Konsumentensegment, wie beispielsweise die Kamera "Logitech C930e" zum Einsatz kommt. Bei den Laborgegenständen oder Laborarbeitsgegenständen, die mit dem vorliegenden Verfahren erkannt werden können oder erkannt werden sollen, kann es sich grundsätzlich um jedweder Form von Gegenständen handeln, die bei entsprechenden Laborarbeiten oder Laborroutinen regelmäßig oder standardisiert zum Einsatz kommen können. Bevorzugt kann es sich um Laborarbeitsgegenstände handeln, die im Rahmen der Behandlung flüssiger Proben bei entsprechenden Laborroutinen von an sich bekannten Laboreinrichtungen, wie beispielsweise Flüssigkeits-Behandlungs-Roboter (liquid handling robots) zum Einsatz kommen. Lediglich beispielhaft sollen nachfolgend verschiedene Gegenstände oder Laborgegenstände genannt werden, die dynamisch und umweltunabhängig von dem vorliegenden Verfahren erkannt werden können: Tiphalter, Tipbox, Thermoblock, Thermoadapter, verschiedene Mikrotiterplatten, und viele mehr.

Die Identifizierung des Auswertebereichs kann im vorgeschlagenen Verfahren grundsätzlich auf unterschiedliche Weise erfolgen. Auf verschiedene Möglichkeiten und diesbezügliche Einzelheiten wird im Weiteren noch eingegangen werden. Die Aufbereitung der Abbildung zur Separierung oder Freistellung des Auswertebereichs in der Abbildung kommen an sich bekannte Bildtransformationen zum Einsatz, die mit einer entsprechenden digitalen Transformationseinrichtung der Aufbereitungseinheit des Systems durchgeführt werden können.

Die Klassifikation besteht aus einer Featuregenerierung und einer anschließenden Klassifikationszuordnung auf Basis dieser erkannten und/oder generierten Feature. Die Featuregenerierung kann bevorzugt auf Basis von händisch erzeugten oder maschinell gelernten Auswahlkriterien, insbesondere durch künstliche Neuronale-Netzwerke erfolgen.

Bei den Klassifikationsverfahren, können für die Klassifizierung z. B. "Nearest Neighbors", "Linear SVM", "RBF SVM", "Gaussian Process", "Decision Tree", "Random Forest", "Neural Net", "AdaBoost", "Naive Bayes", "QDA" und machine learning Klassifizierer, sowie künstliche Neuronale-Netzwerke verwendet werden. Grundsätzlich können die Klassifikationsverfahren so aufgebaut sein, dass zunächst gröbere Strukturen in der Abbildung, insbesondere in der Klassifikationsvorstufe identifiziert werden und anschließend jeweils feinere Strukturen oder Merkmale extrahiert, erkannt und/oder generiert werden werden.

Das Resultat der Durchführung des zumindest einen Klassifikationsverfahrens ist, bei einem entsprechend ausgebildeten trainierten Satz von Operatoren, eine höchst zuverlässige Erkennung von Gegenständen, insbesondere Laborarbeitsgegenständen.

Damit wird durch das erfindungsgemäße Verfahren ermöglicht, dass beispielsweise in jeder Situation einer Laborroutine punktuell oder auch durchgehend der Laborarbeitsbereich, insbesondere eine Mehrzahl von Sollablagepositionen eines Laborarbeitsbereichs mit besonders hoher Zuverlässigkeit seitens des Systems erfasst werden kann, um aus den erfassten Informationen, insbesondere aus den erkannten Gegenständen, und ggf. deren Zustände, nützliche Informationen für die Durchführung oder Abarbeitung der Laborroutine zu gewinnen. Dementsprechend kann beispielsweise die Durchführung oder Abarbeitung der Laborroutine dynamisch oder individuell an eine erfassten Situation und dementsprechend erkannte Gegenstände in den Sollablagebereichen des Arbeitsbereichs angepasst werden.

Eine derart dynamische Erkennung der Situation auf einer Laboreinrichtung ist mit den bisherigen statischen, optischen Kontrollverfahren und Kontrollsystemen keinesfalls möglich. Beispielsweise könnte also mittels des vorgeschlagenen Verfahrens festgestellt werden, dass eine Mikrotiterplatte und ein Spitzenhalter oder Tiphalter auf zueinander vertauschten Sollablagepositionen des Laborarbeitsbereichs angeordnet sind, verglichen mit einer Vorgabe- oder Vordefinition für eine automatische Abarbeitung einer Laborroutine. Durch das erfindungsgemäße Verfahren kann durch die Erzeugung eines Ausgabesignals sowie die Übermittelung und Berücksichtigung der im Ausgabesignal enthaltenen Informationen bezüglich der erkennten Gegenstände die besagte vordefinierte oder vorgegebene Laborroutine trotzdem sicher, zuverlässig und fehlerfrei durchgeführt werden, da trotz der Abweichung von einer an sich bestehenden Vorgabe die Abweichung von der Vorgabe, nämlich die abweichend angeordneten Laborarbeitsgegenstände sicher erkannt und daraufhin die Durchführung der Laborroutine, beispielsweise die Ansteuerung einer Roboterarms, entsprechend angepasst werden kann.

Gemäß einer vorteilhaften Ausgestaltung des Verfahrens kann vorgesehen sein, dass das zumindest eine Klassifikationsverfahren zumindest ein einstufiges oder mehrstufiges Klassifikationsverfahren auf der Basis einer zumindest in einer Stufe stattfindenden Faltung der Bildinhalte der Klassifikationsvorstufe mit einem auf die Gegenstandserkennung trainierten Satz von Operatoren, insbesondere Faltungsoperatoren, mit einer Neuronalen-Netzwerk-Einheit umfasst.

Bei den mehrstufigen Klassifikationsverfahren, also bei den künstlichen neuronalen Netzwerken, kann es sich um mehrstufige Klassifikationsverfahren handeln, bei denen die sogenannten Neuronen einer Stufe oder eine Lage jeweils mit allen Neuronen einer vorangehenden oder übergeordneten Stufe oder Lage verbunden sind. Als Operator, die auch Kernel genannt werden, kommen grundsätzlich verschiedene Arten von Matrizen in Betracht, die je nach Aufgabe der jeweiligen Lage oder des jeweiligen Kernels verschieden ausgebildet sein können. Grundsätzlich sind die Klassifikationsverfahren jedoch so aufgebaut, dass mit den ersten Stufen oder den ersten Lagen gröbere Strukturen in der Abbildung, insbesondere in der Klassifikationsvorstufe identifiziert werden und mit fortschreitenden Stufen oder Lagen jeweils feinere Strukturen oder Merkmale durch die jeweilige Stufe oder Lage erkannt oder identifiziert werden, sodass schließlich eine zuverlässige Gegenstandserkennung möglich ist. Dabei kann vorgesehen sein, dass die Bildinhalte der Klassifikationsvorstufe in der jeweiligen Stufe mit allen Operatoren, insbesondere Operatoren, gefaltet werden. Hierbei wird auch davon gesprochen, dass aus den Bilddaten eine Merkmalskarte oder Feature-Map erzeugt wird, die mit zunehmender Anzahl an Stufen oder Lagen des neuronalen Netzwerkes oder des Klassifikationsverfahrens zunehmend mehr dimensional wird. Dabei kann neben den Lagen oder Stufen, in denen eine entsprechende Faltung mit den Operatoren oder Kernels durchgeführt wird, auch die Einbettung von Zwischenstufen oder Zwischenlagen vorgesehen sein, die eine Zwischenverarbeitung oder Aufbereitung ermöglichen. Beispielsweise können Zusammenfassungsstufen (Pooling Layer) und/oder Ausschlussstufen (Drop out Layer) vorgesehen sein.

Besonders vorteilhaft an einem mehrstufigen Klassifikationsverfahren ist, dass die einzelnen Klassifikatoren oder Operatoren spezialisierter sein können und damit sowohl präziser als auch rechentechnisch günstiger sind.

Eine weitere bevorzugte Ausgestaltung des Verfahrens sieht vor, dass die erzeugte zweidimensionale Abbildung von einer Transformationseinheit zunächst unter Berücksichtigung der Abbildungseigenschaften der Abbildungseinheit transformiert, insbesondere perspektivisch manipuliert wird. Dies kann in besonders vorteilhafter Weise die nachfolgenden Bildbearbeitungsschritte sowie das Klassifikationsverfahren erleichtern, beschleunigen und/oder die Varianz der Abbildungsausschnitte reduzieren.

Bei einer unbekannten Position und/oder Ausrichtung der Abbildungseinheit oder auch wenn die Auswertbereiche nicht überlappungsarm gewählt werden können, kann gemäß einer weiteren besonders vorteilhaften Ausführungsform des Verfahrens vorgesehen sein, dass eine Referenzierungseinheit, die die Änderungen im zeitlichen Verlauf von mit der Abbildungseinheit erzeugten Abbildungen detektieren kann zum Einsatz kommen.

Zur Bestimmung des zumindest einen Auswertebereichs wird ein Vergleich der Abbildung mit einer, Referenzabbildung durchgeführt. Um die Hardware möglichst ressourcenschonend bedienen oder nutzen zu können, kann die Referenzierungseinheit darüber hinaus dazu verwendet werden eine Klassifikation für Auswertbereiche, insbesondere einen Vergleich mit einer Referenzabbildung, nur dann durchzuführen, wenn eine Änderung oder bildliche Veränderung zwischen einer aktuellen Abbildung und der Referenzabbildung bestimmt wurde, welche oberhalb eines als Fläche definierten Schwellwertes liegt.

Dies bedeutet, dass zunächst für vorbestimmte Teilbereiche der Abbildung der Vergleich durchgeführt wird, ob andere Bildinhalte als lediglich der Arbeitsbereich in dem jeweiligen Teilbereich abgebildet ist.

Durch diese Ausgestaltung werden verschiedene Vorteile erreicht. Einerseits ist die Identifizierung des Auswertebereichs über die Durchführung eines Vergleichs mit der Referenzierungseinheit ein klassischer Ansatz der Bildbearbeitung, der auf eine Vielzahl von bekannten Methoden, Algorithmen und Verfahren zurückgreifen kann. Um jedoch eine vollständige Abbildung eines zu erkennenden Laborgegenstands in den Auswertebereich aufzunehmen, was die Grundlage für eine zuverlässige automatische Gegenstandserkennung mit dem Klassifikationsverfahren darstellt, ist es weiterhin besonders vorteilhaft, wenn für einen Teilbereich, in dem festgestellt wird, dass andere Bildinhalte, als der Laborarbeitsbereich abgebildet ist, überprüft wird, ob die einen entsprechenden Laborarbeitsgegenstand repräsentierenden Bildinhalt vollständig von dem Bereich der Abbildung erfasst sind oder aber über diesen hinausragen. Dementsprechend kann auch eine Anpassung der Grenzen des Teilbereichs sinvoll oder notwendig werden.

Gemäß einer vorteilhaften Ausführungsform kann die Identifizierung des Auswertebereichs also durch ein Identifizieren von Hintergrund und sich von diesem Hintergrund abhebenden Vordergrund realisiert werden, wobei der Hintergrund, welcher von der Referenzabbildung abgebildet wird, im weitesten Sinn die statistisch am häufigsten vorkommenden Bildwerte innerhalb eines Zeitinterwalls darstellt, wohingegen der Vordergrund dementsprechend zwangsläufig durch im Laborarbeitsbereich, insbesondere in den Sollablagepositionen des Laborarbeitsbereichs angeordnete, abgelegte oder entfernte Gegenstände abbildet, welche damit die Kandidaten für die automatische Gegenstandserkennung mit dem Klassifikationsverfahren bilden. Die Teilbereiche, welche jeweils einzeln entsprechenden Referenzabbildungen oder Teilbereichen einer Referenzabbildung in der Identifizierungsschrift zur Identifizierung eines Auswertebereichs zugrunde gelegt oder verglichen werden, können den Laborarbeitsbereich bevorzugt Segmente unterteilen. Besonders bevorzugt kann für die beschriebene Bestimmung eines Auswertebereichs mittels einer von der Identifizierungseinheit umfassten Referenzierungseinheit eine farbliche Auswertung der Abbildungen oder der Teilbereiche der Abbildung mit Referenzabbildung, insbesondere entsprechender Teilbereiche der Referenzabbildung, durchgeführt werden. Auch die Helligkeitsinformation, soweit diese vorhanden sind, können in den jeweiligen Teilbereichen der Abbildung und der Referenzabbildung miteinander verglichen werden.

Gemäß einer weiteren besonders vorteilhaften Ausgestaltung des vorliegenden Verfahrens kann vorgesehen sein, dass mit einer Detailerkennungseinheit im Anschluss an eine automatische Erkennung eines Gegenstandes oder im Anschluss an eine automatische Gegenstandserkennung eine geometrische Auswertung, insbesondere eine automatische Erkennung geometrischer Grundstrukturen, bevorzugt weil so zusätzliche Informationen unabhängig von einer Gegenstandsklasse bestimmt werden können und somit nicht nur eine reine Klassifizierung sondern eben auch eine Regression bestimmt werden kann. Diese Regression kann über klassische Bildverarbeitung aber eben auch über Machine Learning (bsp.: support Vector Machine oder auch wieder Neuronale Netze) bestimmt werden.

Dies kann beispielsweise eingesetzt werden, um die Verkippung eines Laborarbeitsgegenstandes oder ein falsch oder verdreht positionierten Laborarbeitsgegenstände zu detektieren.

Außerdem kann im Rahmen der automatischen Gegenstandserkennung kann in einem Auswertebereich einer Abbildung angeordneten Spitzenhalter oder Tiphalter erkannt werden, und in einem im Anschluss durchgeführten Detailerkennungsverfahren oder Detailerkennungsschritt kann mit der Detailerkennungseinheit auf der Basis von bekannten Erkennungen oder Konturerkennungen mittels klassischer Bildanalyse oder Bildauswertung festgestellt werden, in welchen Aufnahmen oder Positionen des Tipphalters oder Spitzenhalters Spitzen angeordnet sind. Aber auch andere Detailerkennungen von mit der Klassifizierungseinheit erkannten, insbesondere automatisch erkannten Gegenständen kann vorteilhaft und für das System besonders ressourcenschonend über die beschriebene automatische Erkennung geometrischer Grundstrukturen erreicht werden.

In einer weiteren vorteilhaften Ausführungsform des Verfahrens, die sich bezüglich der Identifizierung des Auswertebereichs in der Abbildung der Abbildungseinheit von den vorangehenden Ausführungsformen unterscheidet, kann vorteilhaft vorgesehen sein, dass zur Bestimmung des zumindest einen Auswertebereichs eine Auswertung der optischen Abbildungseigenschaften der Abbildungseinheit und der extrinsischen Kalibrierungsdaten bezüglich der Abbildungseinheit verwendet werden. Dies hat den Vorteil, dass gegenüber der oben beschriebenen Identifizierung des Auswertebereichs auf der Grundlage eines optischen Vergleichs mit einer Referenzabbildung, lediglich Informationen bezüglich der Abbildungseinheiten, nämlich extrinsische Kalibrierungsdaten der Abbildungseinheit sowie intrinsische Abbildungsdaten also optische Abbildungseigenschaften der Abbildungseinheit bekannt sein müssen. Dies bedeutet mit anderen Worten ausgedrückt, dass die Erkenntnis über die genaue Positionierung und Ausrichtung der Kamera zusammen mit der Kenntnis oder dem Wissen über die optischen Abbildungseigenschaften der Abbildungseinheit ausreichen, um in der Abbildung der Abbildungseinheit die Auswertebereiche, welche Teile des Laborarbeitsbereichs abbilden, in den Sollablagepositionen befindlich sind, bestimmt werden.

Die hier beschriebene Zuordnung von Auswertebereichen und Sollablagepositionen kann über vorhandene intrinsische und extrinsische Parametrisierung der Abbildungseinheit bestimmt werden, wodurch eine rechnerische Positionierung des in der Abbildung abgebildeten, insbesondere zu erkennenden Gegenstandes in der zweidimensionalen Abbildung erlaubt wird.

Dadurch können die Auswertebereiche oder zumindest ein Auswertebereich schnell und zuverlässig identifiziert werden, auch wenn im Vergleich zur vorangehend beschriebenen Ausführungsform bezüglich der Identifizierung des Auswertebereichs bei der vorliegenden Ausgestaltung eine Anwesenheit eines Gegenstands im Rahmen der Identifizierung des Auswertebereichs zunächst nicht festgestellt wird. Dies kann jedoch in besonders vorteilhafter Weise auf anderem Wege erfolgen, der beispielsweise im Rahmen der nachfolgenden Ausführungsformen beschrieben werden wird.

Denn gemäß einer weiteren besonders bevorzugten Ausgestaltung des Verfahrens kann vorgesehen sein, dass die automatische Gegenstandserkennung mit der Klassifizierungseinheit eine gestaffelte oder geschachtelte Mehrfachanwendung der bereits beschriebenen Klassifikationsverfahren umfasst. Es kann also vorgesehen sein, dass die automatische Gegenstandserkennung zumindest ein weiteres Klassifikationsverfahren auf der Basis einer Featuregenerierung und einer anschließenden Zuordnung zu einer Gegenstandsklasse mit den durch die Featuregenerierung generierten Features der Klassifikationsvorstufe mit einem auf die Gegenstandserkennung trainierten Satz von Operatoren umfasst, wobei auf der Grundlage einer im jeweils vorangegangenen Klassifikationsverfahren identifizierten Gegenstandsklasse mit einer Auswahleinheit eine Teilauswertebereich im Auswertebereich anhand von in einer Speichereinrichtung hinterlegten Informationen über die Gegenstandsklasse identifiziert wird und das Klassifikationsverfahren bevorzugt mit einem für die Gegenstandsklasse speziell trainierten Satz von Operatoren von der Klassifizierungseinheit des Systems durchgeführt wird sodass eine Unterklasse zu der Gegenstandsklasse erkennbar wird. Dies bedeutet mit anderen Worten ausgedrückt, dass es einerseits eine Vereinfachung bezüglich der jeweiligen Operatoren mit sich bringt und andererseits eine schnellere und noch genauere Gegenstandserkennung ermöglicht, wenn in einem Verfahren zur automatischen Gegenstandserkennung gemäß der vorliegenden Erfindung zunächst ein Gegenstand gemäß einer ersten groben Gegenstandsklasse erkannt wird und im Anschluss daran mit jeweils nachfolgend durchgeführten Klassifikationsverfahren seitens der Klassifizierungseinheit entsprechend zueinander kaskadierte oder verschachtelte Unterklassen des Gegenstands erkannt werden.

Diese Unterklassen können durch die Definition bzw. durch die Erarbeitung entsprechend trainierter Operatoren derart detailliert ausgebildet sein, dass neben dem jeweiligen Gegenstand auch ein Gegenstandszustand erkannt werden kann. Beispielsweise kann für einzelne aus einzelnen Komponenten bestehenden Laborgegenstande im Rahmen der verschachtelten und/oder kaskadierten Klassifikationsverfahren bestimmt oder erkannt werden, aus welchen Komponenten oder Teilkomponenten der Gegenstand zusammengesetzt ist und in welcher Konfiguration sich die Zusammensetzung befindet. Besonders vorteilhaft in diesem Zusammenhang ist es, wenn das jeweils nachfolgende oder nachrangige Klassifikationsverfahren nicht den Initial festgelegten oder ausgelesenen Auswertebereich bearbeiten oder klassifizieren muss, sondern wenn dazu jeweils, zumindest gegenüber dem ursprünglichen Auswertebereich eingeschränkt Teilauswertebereiche, ggf. auch in sich wieder kaskadiert oder verschachtelt angeordnete Teilauswertebereiche, zum Einsatz kommen. Dadurch wird in erheblichem Maße die Erkennungsgeschwindigkeit verbessert, obwohl dadurch nicht mehr nur noch grundsätzliche Gegenstände erkannt werden können, sondern Gegenstände hochdetailliert, bis hin zu einzelnen Zuständen einzelner Gegenstandselemente erkannt werden können. Als Beispiel kann auch hier wieder die Erkennung eines Spitzenhalters oder eines Tipphalters verwendet werden. Beispielsweise kann mit einem ersten Mehrstufenklassifikationsverfahren grundsätzlich die Gegenstandsklasse "Tiphalter" oder "Spitzenhalter" erkannt werden. Im Anschluss kann in einem Klassifikationsverfahren ein jeweiliger Hersteller oder Typ eines Spitzenhalters oder Tiphalters erkannt werden. Durch die Auswahl eines oder mehrerer entsprechender spezialisierter Teilauswertebereiche kann in einem anschließenden mehrstufigen Klassifikationsverfahren durch die Klassifizierungseinheit beispielsweise erkannt werden ob und an welchen Positionen des Spitzenhalters Pipettierspitzen angeordnet sind. Schließlich könnte ggf. mittels eines oder mehrerer weiterer mehrstufiger Klassifikationsverfahren durch die Klassifizierungseinheit ermittelt werden, in welchen vorhandenen Pipettierspitzen eine Flüssigkeit, welche Flüssigkeit und mit welchem Füllstand befindlich ist. Gleichermaßen könnte in einem ersten Klassifikationsverfahren die grundsätzliche Anwesenheit eines Gegenstandes in einem Auswertebereich erkannt werden.

Gemäß einer weiteren besonders vorteilhaften Ausgestaltung des Verfahrens kann vorgesehen sein, dass im Anschluss einer automatischen Erkennung eines Gegenstandes, einer Gegenstandsklasse oder eine Gegenstandsunterklasse im System gespeicherte dreidimensionale räumliche Informationen über den Gegenstandes, die Gegenstandsklasse oder die Gegenstandsunterklasse identifiziert werden und dass mit einer Rückrecheneinheit aus den bekannten dreidimensionalen räumlichen Informationen der erkannten Gegenstände, Gegenstandsklasse oder eine Gegenstandsunterklasse eine Projektion von aus den dreidimensionalen Informationen entnommener Muster in ein zweidimensionales Abbildungskoordinatensystem erfolgt und anschließend die Koordinaten der projizierten Muster mit mittels Bildverarbeitung gefundenen entsprechenden Musterkoordinaten der Abbildung, insbesondere der Klassifikationsvorstufe vergleichen werden. Dadurch können Informationen über die Position und Ausrichtung der erkannten Gegenstände gewonnen werden. Diese Informationen können entsprechend weiterverwendet werden. Beispielsweise kann bei einer kaskadierten automatischen Gegenstandserkennung eine falsche Ausrichtung eines Gegenstands einer Gegenstandsklasse zum Abbruch einer weitergehenden automatischen Erkennung führen. Auch kann die gewonnene Information oder das Vergleichsergebnis, insbesondere bei der Feststellung von Abweichungen, als Ausgabesignal mittels einer Ausgabeeinheit ausgegeben und bevorzugt an eine Laboreinrichtung übermittelt und bei der Abarbeitung und/oder Dokumentation einer Laborroutine berücksichtigt werden. Die Ausführungsform bietet ebenfalls eine besonders vorteilhafte Verknüpfung von automatischer Gegenstandserkennung mittels eines von der Klassifizierungseinheit durchgeführten Klassifikationsverfahren einerseits und klassischer Bildanalyse oder Bildauswertung andererseits. Denn es können Koordinaten klassisch erkannter Muster in der Abbildung oder Klassifikationsvorstufe mit entsprechend berechneten Koordinaten verglichen werden, wobei die berechneten Koordinaten aus einer Rückrechnung der bekannten Informationen über einen erkannten Gegenstand und einer entsprechenden Projektion in ein gemeinsames Koordinatensystem stammen. Diese so gewonnenen Informationen können zusammen mit der automatischen Erkennung eines Gegenstandes, einer Gegenstandsklasse oder einer Gegenstandsunterklasse verwendet werden, um einerseits die Gegenstandserkennung weiter zu optimieren oder zu perfektionieren. Andererseits kann die Kombination der aus der Abbildung gewonnenen Informationen und der automatisch erkannten Gegenstände, Gegenstandsklassen oder Gegenstandsunterklassen verwendet, insbesondere verknüpft werden, um neben einer Information über das Vorhandensein oder die Anwesenheit eines bestimmten Gegenstands auch Informationen zu erlangen über deren Positionen und/oder Ausrichtungen. Dazu kann in vorteilhafter Weise auf die Informationen zurückgegriffen werden, die für mit dem mehrstufigen Klassifikationsverfahren erkennbaren Gegenstände in einem Speicher oder einer Speichereinrichtung hinterlegt sind und dreidimensionale oder räumliche Eigenschaften, insbesondere Abmessungen und/oder charakteristische Formen oder Muster der Gegenstände betreffen. Denn dadurch kann ein Vergleich stattfinden zwischen gemessenen Musterkoordinaten anhand der Abbildung und projizierten Daten aus der Rückrechnung der Eigenschaften der erkannten, bekannten Gegenstände. Durch den Vergleich kann beispielsweise auf eine verkippte Anordnung des erkannten Gegenstands, auf eine unebene Ablage des erkannten Gegenstands, auf eine falsch oder unbeabsichtigte Orientierung des Gegenstands auf den Laborarbeitsbereich, insbesondere im Bereich der Sollablageposition, und auf vieles mehr geschlossenen werden, was wiederum von der Laboreinrichtung, insbesondere der Laboreinrichtung des Systems, im Rahmen der Abarbeitung einer Laborroutine berücksichtigt werden kann, um die Laborroutine sicher und zuverlässig durchführen zu können. Beispielsweise kann bei einer verkippten oder unebenen Anordnung eines Laborgegenstands im Bereich einer Sollablageposition zunächst eine Warnung seitens der Laboreinrichtung vor und/oder während der Durchführung der Laborroutine ausgegeben werden. Andererseits könnte die Laboreinrichtung die unebene oder verkippte Ablage des erkannten Laborgegenstands bei der Abarbeitung der Laborroutine auch mitberücksichtigen und so eine sichere und zuverlässige Durchführung der Laborroutine sicherstellen.

Gemäß einer weiteren besonders bevorzugten Ausgestaltung des Verfahrens kann vorgesehen sein, dass mit der Abbildungseinheit ein Bereich eines labortechnischen Arbeitsbereiches abgebildet wird, der eine, bevorzugt matrixförmige, Anordnung, insbesondere eine 3x3 Anordnung, von Sollablagepositionen umfasst.

Eine weitere besonders bevorzugte Ausgestaltung des Verfahrens sieht vor, dass die Abbildung Farbinformationen, insbesondere Farbinformationen in einzelnen Farbkanälen und bevorzugt Helligkeitsinformationen in einem Helligkeitskanal, umfasst wobei im Rahmen der automatischen Gegenstanderkennung die Farbinformationen der einzelnen Kanäle der Featuregenerierung unterzogen werden, wobei insbesondere die Kanäle einzeln untersucht und die Ergebnisse der Untersuchung zur Featuregenerierung zusammengefasst werden. Dadurch können in besonders vorteilhafter Weise die in der Abbildung, insbesondere in dem Auswertebereich vorliegenden Informationen über den zu erkennenden Gegenstand optimal zu dessen automatischer Erkennung genutzt werden.

Gemäß einer weiteren besonders vorteilhaften Ausführung des erfindungsgemäßen Verfahrens kann vorgesehen sein kann, dass das Ausgabesignal verwendet wird, um eine bekannte Laborroutine der Laboreinrichtung zu identifizieren und/oder zu überwachen und/oder zu protokollieren. Denn mit der über das Verfahren erreichten automatischen Gegenstandserkennung kann in allen Abschnitten einer Laborroutine, also fortwährend und nach der Laborroutine, in besonders vorteilhafter Weise die Informationen über die erkannten Gegenstände genutzt werden, um die Laborroutine sicher und effizient durchzuführen. Beispielsweise kann bereits die Ablage von Gegenständen im Bereich der Sollablageposition des Laborarbeitsbereichs dazu genutzt werden, um zu identifizieren, welche Laborroutinen voraussichtlich abgearbeitet werden sollen. Außerdem könnte im Rahmen einer Abarbeitung einer Laborroutine punktuell oder durchgängig überwacht werden, ob die erkannten Gegenstände, und insbesondere die erkannten Gegenstandszustände, noch die sichere Abarbeitung der Laborroutine ermöglichen oder befördern. Schließlich kann mittels der automatisch erkannten Gegenstände eine verbesserte, insbesondere automatische Protokollierung von durchgeführten oder durchzuführenden Laborroutinen gewährleistet werden, indem beispielsweise die verwendeten Laborgegenstände automatisch erfasst und deren Verwendung ggf. zeitlich detailliert festgehalten werden können.

Eine weitere bevorzugte Ausgestaltung des Verfahrens sieht vor, dass das Ausgangssignal verwendet wird, um eine Ähnlichkeit zu einer bekannten Laborroutine, insbesondere samt der Abweichungen von der bekannten Laborroutine der Laboreinrichtung zu identifizieren und insbesondere, um eine die Ähnlichkeit, bevorzugt auch die Abweichung, betreffende Benutzerausgabe zu generieren. Dadurch werden verschiedene Vorteile erreicht. Durch die Identifizierung von Übereinstimmungen und Abweichungen, also über die Bestimmung von Ähnlichkeiten sowie Abweichungen kann einerseits bereits seitens des Systems ein Maßnahmenkatalog ergriffen werden, um trotz ggf. vorliegender Abweichungen von einer bekannten Laborroutine die Laborroutine sicher durchzuführen oder sicher weiter durchführen zu können. Dies beinhaltet beispielsweise die Veränderung von Positionsbefehlen für einen Roboterarm oder eine sonstige Anpassung von Steuerungsbefehlen von Teilen der Laboreinrichtung. Darüber hinaus kann jedoch auch eine Benutzerinteraktion gestartet werden, mit der sowohl die Ähnlichkeit als auch die Unterschiede zu einer bekannten Laborroutine, insbesondere auf der Basis der in den Sollablagepositionen positionierten Laborgegenständen initiiert wird, sodass im Rahmen der Benutzerinteraktion entweder eine händische Veränderung der Anordnung der erkannten Gegenstände in den Sollablagepositionen des Laborarbeitsbereichs herbeigeführt wird oder seitens des Benutzers eine Bestätigung zur Durchführung einer auf die Abweichung hin abgestimmt veränderte Laborroutine durchzuführen oder weiterzuführen.

Eine weitere Ausgestaltung des Verfahrens sieht vor, dass die Operatoren über eine Netzwerkstruktur einmalig oder periodisch zur Verfügung gestellt werden oder auf eine Nutzerseitige Anfrage an das System übermittelt werden. Bevorzugt werden die Operatoren in einem Operatorspeicher gespeichert. Dadurch kann das System auf einem aktuellen Stand gehalten werden, was die automatische Erkennung von Gegenständen betrifft. Außerdem kann das System bedarfsgerecht und benutzerorientiert mit den benötigten Operatoren versorgt werden. Zudem kann eine Verbesserung der automatischen Erkennung durch eine erneute Übermittlung überarbeiteter oder verbesserter Operatoren erreicht werden.

Bezüglich des Systems zur automatischen Erkennung von Laborarbeitsgegenständen, und insbesondere deren Zustand im Bereich einer Mehrzahl von Sollablagepositionen eines Laborarbeitsbereichs wird die o.g. Aufgabe gelöst durch ein System mit einer Abbildungseinheit zum Erzeugen einer einzelnen zweidimensionalen Abbildung eines labortechnischen Arbeitsbereichs, mit einer Identifizierungseinheit zum Identifizieren zumindest eines ersten Auswertebereichs in der zweidimensionalen Abbildung, wobei der zumindest eine Auswertebereich im Bereich einer Sollablageposition eines Arbeitsbereichs angeordnet und abgebildet ist, ferner mit einer Aufbereitungseinheit zur Aufbereitung der Abbildung zu einer Klassifikationsvorstufe, insbesondere hinsichtlich Zuschnitts auf die Abbildung des Auswertebereichs und/oder Formatierung der Abbildung des Auswertebereichs, außerdem mit einer einer Klassifizierungseinheit zur automatischen Gegenstandserkennung auf der Grundlage der Klassifikationsvorstufe unter Anwendung zumindest eines Klassifikationsverfahrens auf der Basis einer Featuregenerierung und einer anschließenden Zuordnung zu einer Gegenstandsklasse mit den durch die Featuregenerierung generierten Features der Klassifikationsvorstufe mit einem auf die Gegenstandserkennung trainierten Satz von Operatoren, wobei das System dazu bevorzugt ein Operatorenspeicher aufweist, indem die jeweiligen Operatoren, insbesondere die jeweiligen Sätze von speziell trainierten Operatoren gespeichert werden und zudem eine Ausgabeeinheit zur Erzeugung eines den automatisch erkannten Gegenstand identifizierenden Ausgangssignals, sowie eine Kommunikationseinheit zum Übermitteln des Aufgabesignals, insbesondere an eine Laboreinrichtung, insbesondere eine vom System umfassten Laboreinrichtung, bevorzugt zur Berücksichtigung des erkannten Gegenstandes bei der Abarbeitung und/oder Dokumentation einer Laborroutine der Laboreinrichtung.

Durch das erfindungsgemäße System werden im Wesentlichen die gleichen Vorteile realisiert und der gleiche erfinderische Grundgedanke umgesetzt, wie bei dem eingangs beschriebenen und offenbarten Verfahren. Dementsprechend wird bzgl. des erfinderischen Grundgedankens und der dadurch verwirklichten Vorteile auf die Beschreibung des Verfahrens Bezug genommen. Ein wesentlicher Bestandteil des Systems ist folglich die Klassifizierungseinheit sowie der Operatorenspeicher zur Speicherung der speziell trainierten Operatoren zur Gegenstandserkennung. Denn einerseits wird durch die Klassifizierungseinheit ermöglicht, ohne eine statische oder unflexible Vorgabe eines zu erkennenden Gegenstandes, Gegenstände, insbesondere Laborgegenstände sicher und zuverlässig zu erkennen. Gleichzeitig wird durch den Operatorenspeicher des Systems die sichere automatische Gegenstandserkennung überhaupt ermöglicht, da die trainierten Operatoren mitunter die Grundlage für die Funktion der Klassifizierungseinheit bildet. Besonders vorteilhaft kann dementsprechend der Operatorenspeicher des Systems so ausgebildet oder so ausgestaltet sein, dass er mit erweiterten, verbesserten oder neuen Operatoren versorgt, insbesondere beschrieben werden kann, um eine stetige Verbesserung des Systems, insbesondere eine Erweiterung des Systems hin zu neuen, zu erkennenden Gegenständen und eine Verbesserung der Gegenstandserkennung zu ermöglichen.

Bei der Abbildungseinheit kann es sich um eine handelsübliche Abbildungseinheit aus dem Konsumentensegment handeln. Die Identifizierungseinheit kann im Wesentlichen von einer datentechnischen Struktur, beispielsweise von einer datentechnischen Recheneinheit bereitgestellt werden. Auch die Aufbereitungseinheit, die Klassifizierungseinheit sowie die Ausgabeeinheit können insgesamt in einem datentechnischen System, insbesondere in einer datentechnischen Recheneinheit eingebettet oder implementiert sein. Gleiches gilt auch für die Kommunikationseinheit des Systems, welche beispielsweise als datentechnische Schnittstelle, bevorzugt als standardisierte datentechnische Schnittstelle, ausgebildet ist.

Eine vorteilhafte Ausführungsform kan vorsehen, dass die Klassifizierungseinheit eine Neuronale-Netzwerk-Einheit (111) umfasst, mit der im Rahmen des Klassifikationsverfahren zumindest ein einstufiges oder mehrstufiges Klassifikationsverfahren auf der Basis einer zumindest in einer Stufe stattfindenden Faltung der Bildinhalte der Klassifikationsvorstufe mit einem auf die Gegenstandserkennung trainierten Satz von Operatoren, insbesondere Faltungsoperatoren, durchführbar ist.

Gemäß einer vorteilhaften Ausgestaltung des Systems kann eine vom System umfasste Transformationseinheit vorgesehen sein, welche mit der Abbildungseinheit erzeugte Abbildungen zunächst unter Berücksichtung der Abbildungseigenschaften der Abbildungseinheiten transformiert, insbesondere perspektivisch manipuliert. Dadurch können die sonstigen Einheiten des Systems mit geringeren Ressourcen hinsichtlich Rechenleistung und Speicherbedarf auskommen. Außerdem kann dadurch die Erkennungssicherheit der Gegenstände seitens der Klassifizierungseinheit erhöht werden.

Gemäß einer vorteilhaften Ausgestaltung des Systems kann vorgesehen sein, dass dieses eine Referenzierungseinheit aufweist, welche die Änderungen der Abbildungen im zeitlichen Verlauf detektieren kann Diese Referenzierungseinheit kann dazu genutzt werden in Teilbereichen der Abbildungen die grundsätzliche Anwesenheit von Gegenständen und/oder die grundsätzliche Entfernung von Gegenständen sicherzustellen und

Ebenfalls kann gemäß einer besonders vorteilhaften Ausgestaltung des Systems eine Detailerkennungseinheit vom System umfasst sein, welche im Anschluss an eine automatische Erkennung eines Gegenstandes durch die Klassifizierungseinheit eine geometrische Auswertung, insbesondere eine automatische Erkennung geometrischer Grundstrukturen, bevorzugt die Erkennung von Kreisstrukturen der Abbildung, insbesondere des Auswertebereichs der Abbildung durchführt, sodass mit der Detailerkennungseinheit eine Detailerkennung bzgl. des erkannten Gegenstandes erfolgt. Dementsprechend kann die Detailerkennungseinheit vorgesehen sein, um beispielsweise in einem erkannten Spitzenhalter angeordnete Pipitierspitzen oder Pipettenspitzen zu erkennen. Gleichermaßen kann eine Verkippung, sowie eine falsche oder verdrehte Positionierung des erkannten Gegenstandes detektiert werden. Gemäß einer weiteren Ausgestaltung kann vorgesehen sein, dass die Abbildungseinheit exzentrisch bzgl. des von der Abbildungseinheit erfassten Bereichs des Laborarbeitsbereichs angeordnet ist, sodass zur Bestimmung des zumindest einen Auswertebereichs eine Auswertung der optischen Abbildungseigenschaften der Abbildungseinheit und der extrinsischen Kalibrierungsdaten der Abbildungseinheit verwendet werden können. Dadurch wird ermöglicht, dass der zumindest eine Auswertebereich identifiziert wird, ohne dass dazu ein Vergleich mit einer wie auch immer gearteten Referenzabbildung durchgeführt werden muss. Der zumindest eine Auswertebereich wird in dieser Ausgestaltung des Systems lediglich aufgrund seiner Lage im Laborarbeitsbereich bestimmt.

Ebenfalls kann in einer vorteilhaften Ausführung des Systems vorgesehen sein, dass das System eine Auswahleinheit umfasst, welche auf der Grundlage einer in einem vorangegangenen Klassifikationsverfahren identifizierten Gegenstandsklasse einen Teilauswertebereich im Auswertebereich anhand von in einer Speichereinrichtung hinterlegten Informationen über die Gegenstandsklasse auswählt, um mit der Klassifizierungseinheit eine weitere automatische Gegenstandserkennung mit zumindest einem weiteren Klassifikationsverfahren auf der Basis einer Featuregenerierung und einer anschließenden Zuordnung zu einer Gegenstandsklasse mit den durch die Featuregenerierung generierten Features der Bildinhalte der Klassifikationsvorstufe, insbesondere des Teilauswerteberichs mit einem auf die Gegenstandserkennung trainierten Satz von Operatoren durzuführen, wobei das Klassifikationsverfahren bevorzugt mit einem für die Gegenstandsklasse speziell trainierten Satz von Operatoren von der Klassifizierungseinheit (11) des Systems (1) durchgeführt wird sodass eine Unterklasse zu der Gegenstandsklasse erkennbar wird. Die Auswahleinheit bildet damit die Grundlage für eine in sich geschachtelte oder kaskadierte automatische Gegenstandserkennung mit der Klassifizierungseinheit des Systems. Zudem benötigt das System gemäß der vorliegenden Ausführungsform einen weiteren Speicher oder Speicherbereich, indem die jeweiligen Teilauswertebereiche für eine erkannte Gegenstandsklasse oder Gegenstandsunterklasse gespeichert sind. Zudem muss auch der ggf. vorgesehene Operatorenspeicher mit geeigneten, insbesondere geeignet trainierten Sätzen von Operatoren bestückt werden, um das kaskadierte automatische Erkennen eines Gegenstandes, ggf. hin bis zu Details oder Zuständen des jeweiligen Gegenstands erreichen zu können.

Eine weitere besonders vorteilhafte Ausgestaltung des Systems umfasst eine Rückrecheneinheit. Diese ermöglicht, dass im Anschluss einer automatischen Erkennung eines Gegenstandes, einer Gegenstandsklasse oder eine Gegenstandsunterklasse im System gespeicherte dreidimensionale räumliche Informationen über den Gegenstand, die Gegenstandsklasse oder die Gegenstandsunterklasse identifiziert werden und dass mit einer Rückrecheneinheit aus den bekannten dreidimensionalen räumlichen Informationen der erkannten Gegenstände, Gegenstandsklasse oder Gegenstandsunterklasse eine Projektion von aus den dreidimensionalen Informationen entnommener Muster in ein zweidimensionales Abbildungskoordinatensystem erfolgt und anschließend die Koordinaten der projizierten Muster mit mittels Bildverarbeitung gefundenen entsprechenden Musterkoordinaten der Abbildung, insbesondere der Klassifikationsvorstufe vergleichen werden Bevorzugt kann das Vergleichsergebnis insbesondere bei der Feststellung von Abweichungen als Ausgabesignal mittels der Ausgabeeinheit ausgegeben und bevorzugt an eine Laboreinrichtung übermittelt und bei der Abarbeitung und/oder Dokumentation einer Laborroutine berücksichtigt werden kann.

Dadurch wird mittels der Rückrecheneinheit die vorteilhaften Wirkungen klassischer Bildanalyseverfahren oder klassischer Bildanalyse mit den Vorteilen der automatischen Gegenstandserkennung auf der Grundlage eines Klassifizierungsverfahrens oder auf der Grundlage einer Klassifizierungseinheit besonders vorteilhaft zur gesteigerten Erkennungssicherheit sowie zu weiteren Zwecken miteinander verknüpft.

Gemäß einer weiteren vorteilhaften Ausgestaltung des Verfahrens kann die Abbildungseinheit so angeordnet sein, dass mit der Abbildungseinheit ein Bereich eines labortechnischen Arbeitsbereichs abgebildet wird, der eine, insbesondere matrixförmige Anordnung von, insbesondere 3x3, Sollablageposition umfasst. Damit kann besonders schnell, besonders sicher und mit besonders hoher Zuverlässigkeit der zumindest eine Auswertebereich identifiziert werden.

Gemäß einer weiteren bevorzugten Ausgestaltung des Systems ist vorgesehen, dass eine Identifizierungs- und/oder Protokoll- und/oder Überwachungseinheit, mit der anhand des Ausgabesignals eine bekannte Laborroutine der Laboreinrichtung identifiziert und/oder überwacht und/oder protokolliert wird, vom System mit umfasst ist. Dadurch kann sichergestellt werden, dass die automatisch erkannten Gegenstände und das diesbezügliche Ausgabesignal eine entsprechende Verarbeitung erfahren, sodass der Betrieb der Laboreinrichtung durch die automatische Gegenstandserkennung optimal unterstützt wird.

Gemäß einer weiteren Ausgestaltung des Systems kann zudem vorgesehen sein, dass mit einer Benutzerschnittstelle eine Benutzerausgabe kommuniziert wird, die anhand des Ausgabesignals eine identifizierte Ähnlichkeit zu einer bekannten Laborroutine, insbesondere samt der identifizierten Abweichungen von der bekannten Laborroutine der Laboreinrichtung ausgibt oder kommuniziert.

Weitere vorteilhafte Merkmale und Einzelheiten der Erfindung ergeben sich aus der nachfolgenden Beschreibung der anhand schematischer Zeichnungen erläuterten Ausführungsbeispiele. Darin zeigen:
- Fig. 1: ein Ablaufdiagramm eines erfindungsgemäßen Verfahrens in einer ersten Ausführungsform;
- Fig. 2: ein Ablaufdiagramm eines erfindungsgemäßen Verfahrens in eine zweiten Ausführungsform; und
- Fig. 3: eine schematische Darstellung eines erfindungsgemäßen Systems.

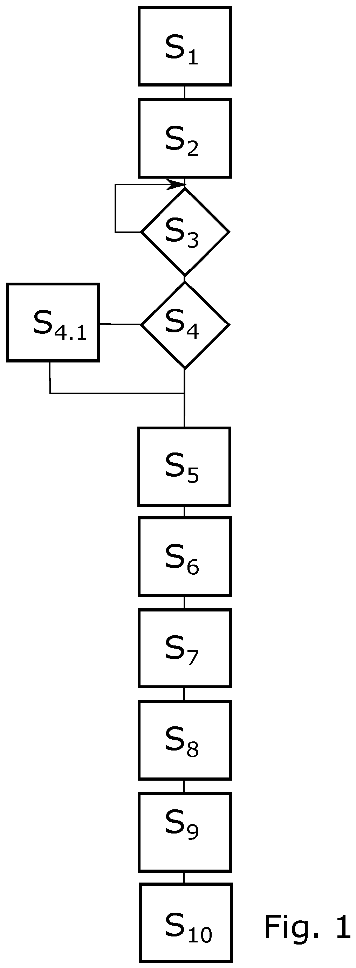

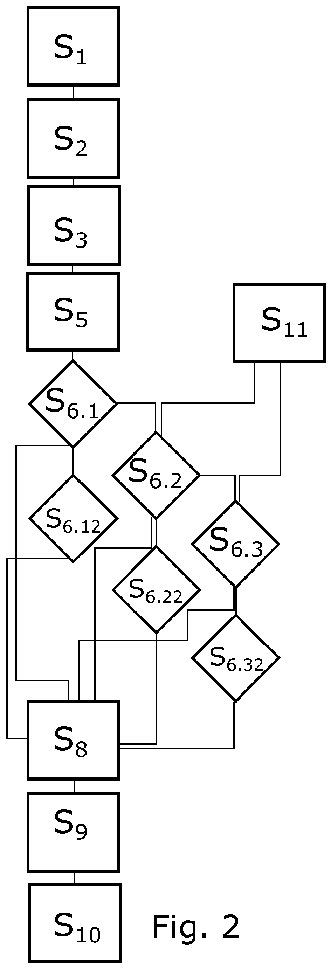

Im Nachfolgenden werden mit Bezug zur Fig.1 und Fig. 2 zwei Ausführungsformen des Verfahrens beschrieben, bei denen die Featuregenerierung und die anschließende Zuordnung zu einer Gegenstandsklasse mit den durch die Featuregenerierung generierten Features durchgängig mittels künstlichen neuronalen Netzwerken erfolgt. Es kann jedoch, wie oben bereits beschrieben eine Vielzahl anderer Verfahren zur Featuregenerierung und Zuordnung der erkannten Feature zu einer Gegenstandsklasse eingesetzt werden. Diese können bei Bedarf künstliche Neuronale Netzwerke umfassen oder einschließen.

Das erfindungsgemäße Verfahren beginnt in der beispielhaften Ausgestaltung der Fig. 1 mit einem ersten Verfahrensschritt S1, in dem mit der zweidimensionalen Abbildungseinheit eine zweidimensionale Abbildung eines Laborarbeitsbereichs erzeugt wird, wobei die Abbildungseinheit so angeordnet und ausgerichtet ist, dass ein Bereich des Laborarbeitsbereichs abgebildet wird, der eine Mehrzahl von SollAblagepositionen für Laborarbeitsgegenstände oder Laborgegenstände abbildet. In einem daran anschließenden Verfahrensschritt S2 kann beispielsweise mittels einer Transformationseinheit zunächst eine Transformation, insbesondere eine perspektivische Manipulation der Abbildung unter Berücksichtigung der Abbildungseigenschaften der Abbildungseinheit vorgenommen werden.

In einem weiteren Verfahrensschritt S3 kann die Identifizierung zumindest eines ersten Auswertebereichs in der zweidimensionalen Abbildung stattfinden, wobei der zumindest eine Auswertebereich im Bereich einer Sollablageposition eines Arbeitsbereichs angeordnet und abgebildet ist. Im Beispiel der Fig. 1 wird die Identifizierung des Auswertebereichs über die Referenzierungseinheit des Systems durchgeführt, welches überprüft, ob in einem Teilbereich, insbesondere in einem vordefinierten Teilbereich der Abbildung bezogen auf eine einen Hintergrund oder dem Laborbereich abbildenden Vergleichsabbildung, andere Bildinhalte festgestellt werden, die somit, zumindest potentiell automatisch zu erkennende Gegenstände abbilden. Wird im Verfahrensschritt S3 im Rahmen des Vergleichs mit der Referenzabbildung vom Laborarbeitsbereich abweichender Bildinhalt in dem vordefinierten Teilbereich der entzerrten Abbildung identifiziert, so wird im Verfahrensschritt S4 das Verfahren fortgesetzt. Wird in dem vordefinierten Teilbereich keine Abweichung zum entsprechenden Teilbereich der Referenzabbildung oder zur entsprechendem dem Teilbereich zugeordneten Referenzabbildung festgestellt, wird das Verfahren im Verfahrensschritt S3 mit der Überprüfung eines nächsten definierten Teilbereichs der Abbildung fortgesetzt, bis alle vordefinierten Teilbereiche der Abbildung mit entsprechenden Referenzabbildungen verglichen und die Anwesenheit von anderen Bildinhalten außer dem Laborarbeitsbereich selbst festgestellt sind.

Für alle Teilbereiche, für die eine entsprechende Abweichung von der Referenzabbildung festgestellt wurden, und welche somit als Auswertebereich oder als Grundlage für einen Auswertebereich festgelegt wurden, wird im Rahmen des Verfahrensschritts S4 festgestellt, ob die nicht dem Arbeitsbereich wiedergebenden oder abbildenden Bildinhalte des Teilbereichs der Abbildung über die Grenzen des Teilbereichs der Abbildung hinausreichen. Ist dies der Fall, so wird in einem Verfahrensschritt S4.1 eine Grenzanpassung oder eine Anpassung der Grenzen des Teilbereichs der Abbildung vorgenommen, sodass die sich vom Hintergrund oder von dem Laborarbeitsbereich der Referenzabbildung unterscheidenden Bildinhalte vollständig von dem erweiterten Auswertebereich umfasst sind. Für die ursprünglichen sowie für die erweiterten Auswertebereiche erfolgt im anschließenden Verfahrensschritt S5 eine Aufbereitung zu einer Klassifikationsvorstufe, wobei die Abbildung insbesondere hinsichtlich der Formatierung, beispielsweise hinsichtlich des Seitenverhältnisses sowie hinsichtlich des Zuschnitts angepasst, insbesondere auf den Auswertebereich angepasst wird. In einem folgenden Verfahrensschritt S6 erfolgt die automatische Gegenstandserkennung mit der Klassifizierungseinheit, insbesondere mit der Neuronalen-Netzwerk-Einheit des Systems, wobei die automatische Gegenstandserkennung auf der Grundlage der Klassifikationsvorstufe unter Anwendung zumindest eines mehrstufigen Klassifikationsverfahrens auf der Basis einer zumindest in einer Stufe stattfindenden Faltung der Bildinhalte der Klassifikationsvorstufe mit einem auf die Gegenstandserkennung trainierten Satz von Operatoren , insbesondere Faltungsoperatoren durchgeführt wird. Der Verfahrensschritt S6 liefert damit als Ergebnis oder als Ausgabegröße einen jeweils der Klassifikationsvorstufe zugeordneten erkannten Gegenstand oder Laborgegenstand. Beispielsweise kann im Rahmen des Verfahrensschritts S6 ein in einer Sollablageposition eines Laborarbeitsbereichs angeordneter Gegenstand als Mikropipitierplatte einer bestimmten Art und/oder eines bestimmten Herstellers erkannt werden.

Im Anschluss an den Verfahrensschritt S6 kann zudem vorgesehen sein, dass in einem Verfahrensschritt S7 mit einer Detailerkennungseinheit eine geometrische Auswertung, insbesondere eine automatische Erkennung geometrischer Grundstrukturen, bevorzugt die Erkennung von Kreisstrukturen der Abbildung, insbesondere des Auswertebereichs und/oder der Klassifikationsvorstufe durchgeführt wird, mit dem eine Detailerkennung des erkannten Gegenstandes erfolgt.

Auf der Grundlage dieses automatisch erkannten Gegenstandes wird seitens des Systems im Verfahrensschritt S8 des erfindungsgemäßen Verfahrens ein Ausgabesignal mittels einer Ausgabeeinheit erzeugt, welches den erkannten Gegenstand identifiziert.

In einem nächsten Verfahrensschritt S9 kann mit einer Kommunikationseinheit des Systems eine Übermittlung des Ausgabesignals an eine Laboreinrichtung erfolgen und ggf. das Ausgabesignal und damit der erkannte Gegenstand bei der Durchführung, Konfiguration oder Abarbeitung einer Laborroutine der Laboreinrichtung berücksichtigt werden. Dazu kann beispielsweise im abschließenden Verfahrensschritt S10 vorgesehen sein, dass einzelne Verfahrensschritte einer Laborroutine, beispielsweise die Anfahrposition für einen Roboterarm eines Laborautomaten auf der Grundlage des erkannten Gegenstands und ggf. auf der Grundlage der erkannten Details eines Gegenstandes angepasst oder verändert werden. Aber auch eine anderweitige Verwendung des Ausgabesignals kann vorgesehen sein.

In der Fig. 2 wird eine abgewandelte Verfahrensführung des Verfahrens der Fig. 1 beschrieben, bei der ein Teil des Verfahrens analog oder identisch zur Beschreibung des Verfahrens der Fig. 1 durchgeführt wird. Dementsprechend wird auf Verfahrensschritte, die eine weitestgehend identische Verfahrensführung, z.B. der Fig. 1 vorsehen nicht nochmals im Detail eingegangen werden. Die Erzeugung der Abbildung im Verfahrensschritt S1 entspricht im Wesentlichen dem Vorgehen gemäß dem Verfahren der Fig. 1. Gleiches gilt auch für die Manipulation im Rahmen des Verfahrensschritts S2. Ein erster Unterschied bzgl. der Verfahrensführung tritt im Verfahrensschritt S3 auf, bei dem gemäß der Ausführungsform des Verfahrens, wie sie in der Fig. 2 dargestellt ist, nicht ein Abgleich von Teilen der Abbildung mit einer Referenzabbildung durchgeführt wird, sondern auf der Auswertung der optischen Abbildungseigenschaften der Abbildungseinheit und der extrinsischen Kalibrierungsdaten der Abbildungseinheit zumindest ein Auswertebereich bestimmt oder identifiziert wird, der einen Bereich einer Sollablageposition eines Laborarbeitsbereiches abbildet. Der Verfahrensschritt S4, der die Überprüfung der Vollständigkeit des Auswertebereichs in der Ausführungsform der Fig. 1 betrifft, kann bei der Ausführungsform der Fig. 2 unterbleiben, da die entsprechenden Auswertebereiche oder der zumindest eine Auswertebereich so gewählt wird, dass eine Erweiterung des Auswertebereichs nicht erforderlich ist.

Dementsprechend schließt an den Verfahrensschritt S3 unmittelbar der Verfahrensschritt S5 an, indem, analog zur Verfahrensführung der Fig. 1 ein Aufbereitungsschritt stattfindet, indem eine Klassifikationsvorstufe erzeugt wird, die insbesondere bzgl. der Formatierung der Abbildung des Auswertebereichs, beispielsweise bzgl. des Seitenverhältnisses angepasst oder für nachfolgende automatische Gegenstandserkennung optimiert ist. Im Anschluss daran erfolgt im Verfahrensschritt S6 die automatische Gegenstandserkennung mit der Klassifizierungseinheit, insbesondere Neuronalen-Netzwerk-Einheit des Systems. Im Gegensatz zum Verfahren der Fig. 1 wird jedoch in der Fig. 2 ein entsprechendes mehrstufiges Klassifikationsverfahren in den jeweiligen Verfahrensschritten S6.1, S6.2 und S6.3 mehrfach durchlaufen, insbesondere kaskadiert durchlaufen, wobei bei einer erfolgreichen Erkennung eine Gegenstandsklasse im mehrstufigen Klassifikationsverfahren des Verfahrensschritts S6.1 und einer Mehrzahl von im System hinterlegten Gegenstandsunterklassen zu der erkannten Gegenstandsklasse im Rahmen des Verfahrensschritt S6.2 abermals mit dem Klassifikationsverfahren, nun aber ggf. mit optimierten oder spezialisierten Operatoren, die Gegenstandsunterklasse, und soweit weitere Unterklassen vorhanden oder definiert sind, im Verfahrensschritt S6.3 noch eine zusätzliche Unterklasse oder Gegenstandsunterklasse automatisch erkannt wird. In den Verfahrensschritten S6.1, S6.2 und S6.3 können dabei neben jeweils für die bereits erkannte Gegenstandsklasse optimierte Operatoren auch jeweils optimierte Teilauswertebereiche der automatischen Gegenstandserkennung zugrunde gelegt werden. An den Verfahrensschritt S6.3 können sich noch weitere kaskadierte mehrstufige Klassifikationsverfahren anschließen, die soweit oder so stark untergliedert sein können, dass neben einem sehr detaillierten Ergebnis bzw. automatisch erkannten Gegenstands auch Ergebnisse bezüglich des Zustands des Gegenstands erhalten werden können, beispielsweise kann die Konfiguration von Teilkomponenten eines Gegenstandes in einem entsprechend weit verzweigten hierarchischen oder kaskadischen automatischen Erkennungsprozess im Rahmen des Verfahrensschritts S6 bestimmt werden. Es kann zusätzlich vorgesehen sein, dass jeweils anschließend and die Verfahrensschritten S6.2 bis S6.n eine Rückkopplung in den Verfahrensschritt S11 oder die Verfahrensschritte S2 bis S5 oder die Abarbeitung eines ähnlich ausgebildeten Verfahrenschritt erfolgt, der/die dazu dient/dienen jeweils basierend auf dem Erkennungsergebnis der vorangegangenen automatischen Gegenstandserkennung S6.1 bis S6.n-1 einen optimierten Auswertebereich oder Teilauswertebereiche zu bestimmen und/oder aufzubereiten. Die jeweiligen Ergebnisse als die optimierten Auswertebereiche oder Teilauswertebereiche und gegebenenfalls die optimierten Operatoren, insbesondere Faltungsoperatoren werden den nachrangigen automatischen Erkennungsverfahren S6.2 bid S6.n zur Verfügung gestellt oder bilden Eingangssignale für die entsprechenden automatischen Erkennungsverfahren. Damit wird der Verfahrensschritt S11, wenn auch aus Übersichtlichkeitsgründen nicht bildlich in der Fig. 2 verdeutlicht, jeweils durch eine erfolgreiche positive Erkennung oder automatische Erkennung eines Gegenstandes, eine Gegenstandsklasse oder einer Unterklasse im Schritt S6.1 bis S6.n-1 initiiert. Die Verfahrensschritte S6.1 bis S6.n können auch andere Featuregenerierungsverfahren und Zuordnungsverfahren der erkannten Feature umfassen. Damit ersetzen die Verfahrensschritte S6.1 bis ggf. S6.n auch die gemäß der Verfahrensführung der Fig. 1 notwendige oder sinnvolle Detailerkennung des Verfahrensschritts S7. Somit wird in der Fig. 2 unmittelbar mit dem Verfahrensschritt S8 sowie den Verfahrensschritten S9 und S10 fortgefahren, welche wiederum weitestgehend identisch oder analog zu den entsprechenden Verfahrensschritten gemäß der Verfahrensführung der Fig. 1 ablaufen.

Ein weiterer bzw. zusätzlicher Verfahrensschritt S6.12 bis S6.1k kann vorgesehen sein, um mit einer Rückrecheneinheit im Anschluss einer automatischen Erkennung eines Gegenstandes, einer Gegenstandsklasse oder eine Gegenstandsunterklasse im System gespeicherte dreidimensionale räumliche Informationen über den Gegenstandes, die Gegenstandsklasse oder die Gegenstandsunterklasse zu identifizieren und mit der Rückrecheneinheit aus den bekannten dreidimensionalen räumlichen Informationen der erkannten Gegenstände, Gegenstandsklasse oder eine Gegenstandsunterklasse eine Projektion von aus den dreidimensionalen Informationen entnommener Muster in ein zweidimensionales Abbildungskoordinatensystem vorzunehmen und anschließend die Koordinaten der projizierten Muster mit mittels Bildverarbeitung gefundenen entsprechenden Musterkoordinaten der Abbildung, insbesondere der Klassifikationsvorstufe zu vergleichen. Im Anschluss an den Verfahrensschritt S6.12 bis S6.1k kann das Vergleichsergebnis, insbesondere bei der Feststellung von Abweichungen als Ausgabesignal mittels einer Ausgabeeinheit im Rahmen des Verfahrensschritts S8 ausgegeben werden. Das entsprechende Ausgabesignal kann dann im Verfahrensschritt S10 bei der Durchführung oder Abarbeitung einer Laborroutine berücksichtigt werden. Die Verfahrensschritte S6.12 bis S6.1k können zudem auch als Abbruchkriterium für die nachfolgenden übergeordneten Verfahrensschritte S6.2 bis S6.n dienen. Denn wenn im Verfahren S6.12 bis S6.1k eine entsprechende Abweichung festgestellt wurde, kann die korrekte Definition eines speziellen Teilauswertebereichs in der Abbildung oder der Klassifikationsvorstufe erschwert oder unmöglich sein.

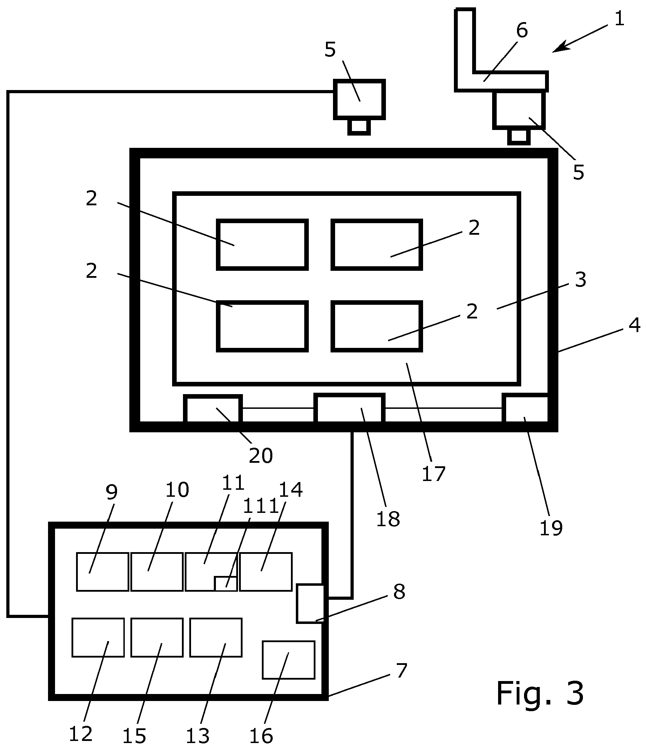

Fig. 3 zeigt eine schematische Darstellung eines erfindungsgemäßen Systems 1 zur automatischen Erkennung von Laborarbeitsgegenständen, und insbesondere deren Zustand, im Bereich einer Mehrzahl von Sollablagepositionen 2 eines Laborarbeitsbereichs 3. Der Laborarbeitsbereich 3 sowie dir darin befindlichen Sollablageposition 2 können beispielsweise Teil einer Laboreinrichtung 4, beispielsweise eines Laborautomaten sein. Außerdem umfasst das System 1 eine Abbildungseinheit 5, welche beispielsweise als Digitalkamera ausgebildet sein kann und welche entweder statisch bzgl. des Laborarbeitsbereichs und/oder gegenüber der Laboreinrichtung 4 angeordnet sein kann oder aber beweglich gegenüber dem Laborarbeitsbereich 3 oder der Laboreinrichtung 4 ausgebildet sein kann. Bei einer beweglichen Realisierung der Abbildungseinheit 5 kann besonders vorteilhaft vorgesehen sein, dass dieser sich zusammen mit einem Gegenstand des Systems bewegt wird oder bewegen lässt, der eine genaue Positionsbestimmung der Abbildungseinheit trotz der grundsätzlichen Beweglichkeit der Abbildungseinheit zulässt. Beispielsweise kann die Abbildungseinheit 5 an einem beweglich ausgebildeten Roboterarm 6 angeordnet sein, wobei über die Antriebsmechanik des Roboterarms 6 die exakte Positionierung der Abbildungseinheit 5 gegenüber dem Arbeitsbereich 3 bestimmt werden kann oder ermittelbar ist. Wie in der Fig. 3 dargestellt, kann das System 1 auch zwei Abbildungseinheiten 5 umfassen. Es ist jedoch auch eine Ausführungsform mit lediglich einer einzelnen Abbildungseinheit 5 möglich. Die Abbildungseinheit 5 des Systems 1 ist über eine geeignete datentechnische Verbindung mit einer Recheneinheit 7 des Systems verbunden, wobei die Recheneinheit 7 wiederum Teil der Laboreinrichtung 4 sein kann oder über eine Kommunikationseinheit 8 mit der Laboreinrichtung 4 verbunden ist. Mit der Verbindung zwischen der Abbildungseinheit 5 und der Recheneinheit 7 können die mittels der Abbildungseinheit 5 erzeugten zweidimensionalen Abbildungen, insbesondere farbigen zweidimensionalen Abbildungen an die Recheneinheit 7 übermittelt und dort weiterverarbeitet werden.

Insbesondere kann die Recheneinheit 7 die Identifizierungseinheit 9 die Aufbereitungseinheit 10, die Klassifizierungseinheit 11 sowie ggf. die Transformationseinheit 12, die Referenzierungseinheit 13, die Detailerkennungseinheit 14, die Rückrecheneinheit 15 sowie weitere im Verfahren benötigte datentechnische Einheit umfassen. Die Klassifizierungseinheit 11 kann die Neuronale-Netzwerk-Einheit 111 aufweisen. Außerdem kann vorgesehen sein, dass die Recheneinheit 7 verschiedene Speichereinheiten, wie beispielsweise der Operatorspeicher 16 sowie weitere für die Durchführung des Verfahrens benötigte Speichereinheiten oder Speichereinrichtungen umfassen.

Die Abbildungseinheit 5 kann gemäß einer besonders bevorzugten Ausgestaltung ein Bereich eines Laborarbeitsbereichs 3 abbilden, der eine Anordnung 17 von Sollablagepositionen 2 umfasst. Dabei kann vorgesehen sein, dass die Abbildungseinheit 5 exzentrisch gegenüber dem Laborarbeitsbereich und insbesondere der Anordnung von Sollablagepositionen 2 angeordnet ist, um einerseits eine Rückrechnung von dreidimensionalen Informationen aus den zweidimensionalen Abbildungen der Abbildungseinheit 5 zu erlauben. Die Sollablageposition 2, welche sowie auch der Laborarbeitsbereich 3 bevorzugte Teil der Laboreinrichtung 4 sind, können bevorzugt optisch markiert, insbesondere optisch hervorgehoben sein. Diese auf dem Laborarbeitsbereich 3 natürlich vorkommenden Markierungen und Hervorhebungen können für eine automatische extrinsische Kalibrierung der Abbildungseinheit 5 verwendet werden. Auf Seiten der Laboreinrichtung 4 wird das von der Recheneinheit 7 des Systems 1 erzeugte Ausgabesignal von einer Eingangsschnittstelle 18 empfangen und weiter verarbeitet. Im Rahmen der Weiterverarbeitung kann beispielsweise Einfluss auf eine Steuer- und Regeleinheit 19 der Laboreinrichtung ausgeübt werden. Gleichermaßen kann die Weiterverarbeitung derart erfolgen, dass über eine Benutzerschnittstelle 20 der Laboreinrichtung eine Benutzerausgabe erzeugt oder eine Benutzerinteraktion initiiert wird. Die Eingangsschnittstelle 18, die Steuer- und Regeleinheit 19 und/oder die Benutzerschnittstelle 20 können auch extern zur Laboreinrichtung 4, beispielsweise in einer separaten Recheneinheit angeordnet sein. Das erzeugte Ausgabesignal muss nicht zwangsläufig an die Laboreinheit 4 übertragen werden. Es kann auch eine anderweitige Verarbeitung vorgesehen werden, beispielsweise im Rahmen der Dokumentation einer Laborroutine, die extern oder unabhängig von der jeweiligen Laboreinrichtung durchgeführt wird.

### Bezugszeichen

- 1: System
- 2: Sollablageposition
- 3: Laborarbeitsbereich
- 4: Laboreinrichtung
- 5: Abbildungseinheit
- 6: Roboterarm
- 7: Recheneinheit
- 8: Kommunikationseinheit
- 9: Identifizierungseinheit
- 10: Aufbereitungseinheit
- 11: Klassifizierungseinheit
- 12: Transformationseinheit
- 13: Referenzierungseinheit
- 14: Detailerkennungseinheit
- 15: Rückrecheneinheit
- 16: Operatorspeicher
- 17: Anordnung von Sollablagepositionen
- 18: Eingangsschnittstelle
- 19: Steuer- und Regeleinheit
- 20: Benutzerschnittstelle
- 111: Neuronale-Netzwerk-Einheit

## Patentansprüche

1. Verfahren zum Betrieb eines Systems (1) zur automatischen Erkennung von Laborarbeitsgegenständen und deren Zustand, im Bereich einer Mehrzahl von Sollablagepositionen (2) eines Laborarbeitsbereiches (3) mit den Verfahrensschritten:
- Erzeugen einer einzelnen zweidimensionalen Abbildung eines labortechnischen Arbeitsbereichs (3) mit einer Abbildungseinheit (5) zur Erzeugung von zweidimensionalen Abbildungen, wobei der Arbeitsbereich (3) eine matrixförmige Anordnung von Sollablagepositionen (2) umfasst;
- Identifizieren zumindest eines ersten Auswertebereichs in der zweidimensionalen Abbildung mit einer Identifizierungseinheit (9) des Systems (1), wobei der zumindest eine Auswertebereich im Bereich einer Sollablageposition (2) des Arbeitsbereichs (3) angeordnet und abgebildet ist;- Aufbereitung der Abbildung, mit einer Aufbereitungseinheit (10) des Systems (1), zu einer Klassifikationsvorstufe hinsichtlich Zuschnitts auf die Abbildung des Auswertebereichs und/oder Formatierung der Abbildung des Auswertebereichs;
- Automatische Gegenstandserkennung auf der Grundlage der Klassifikationsvorstufe unter Anwendung zumindest eines Klassifikationsverfahrens auf der Basis einer Featuregenerierung und einer anschließenden Zuordnung zu einer Gegenstandsklasse mit den durch die Featuregenerierung generierten Features mit einer Klassifizierungseinheit (11) des Systems (1)
- Erzeugung eines den erkannten Gegenstand identifizierenden Ausgabesignals mittels einer Ausgabeeinheit,
- Übermitteln des Ausgabesignals an eine Laboreinrichtung (4) des Systems (1), mit einer Kommunikationseinheit (8) des Systems (1), und Berücksichtigung des erkannten Gegenstandes bei der Abarbeitung einer Laborroutine der Laboreinrichtung (4), nämlich einer Ansteuerung eines Roboterarms;
wobei die Featuregenerierung auf der Basis von händisch erzeugten und/oder maschinell gelernten Auswahlkriterien durch künstliche Neuronale-Netzwerke erfolgt und/oder die Zuordnung der generierten Feature zu einer Gegenstandsklasse auf der Basis von künstlichen Neuronalen-Netzwerken erfolgt;
wobei das zumindest eine Klassifikationsverfahren zumindest ein mehrstufiges Klassifikationsverfahren auf der Basis einer zumindest in einer Stufe stattfindenden Faltung der Bildinhalte der Klassifikationsvorstufe mit einem auf die Gegenstandserkennung trainierten Satz von Operatoren, nämlich Faltungsoperatoren, mit einer Neuronalen-Netzwerk-Einheit (111) umfasst;
wobei bei Anwendung des mehrstufigen Klassifikationsverfahrens zunächst in den ersten Stufen des künstlichen neuronalen Netzwerkes ein Gegenstand gemäß einer ersten groben Gegenstandsklasse erkannt wird und mit fortschreitenden Stufen jeweils feinere Strukturen durch die jeweilige Stufe erkannt werden und im Anschluss daran mit jeweils nachfolgend durchgeführten Klassifikationsverfahren seitens der Klassifizierungseinheit (11) entsprechend zueinander kaskadierte oder verschachtelte Unterklassen des Gegenstands erkannt werden;
wobei die Abbildung Farbinformationen in einzelnen Farbkanälen, und bevorzugt Helligkeitsinformationen in einem Helligkeitskanal, umfasst, wobei im Rahmen der automatischen Gegenstanderkennung zumindest die Farbinformationen der einzelnen Kanäle der Featuregenerierung unterzogen werden, wobei die Kanäle einzeln untersucht und die Ergebnisse der Untersuchung zur Featuregenerierung zusammengefasst werden;
wobei die Unterklassen durch die Definition der trainierten Operatoren derart detailliert ausgebildet sind, dass neben dem Gegenstand auch ein Gegenstandszustand erkannt wird; wobei das jeweils nachfolgende Klassifikationsverfahren auf einem kaskadiert oder verschachtelt angeordneten Teilauswertebereich des zumindest einen ersten Auswertebereichs bearbeitet;
wobei in einer ersten Stufe des mehrstufigen Klassifikationsverfahrens eine Gegenstandsklasse Spitzenhalter erkannt wird;
wobei durch Auswahl eines oder mehrerer Teilauswertebereiche in dem mehrstufiten Klassifikationsverfahren durch die Klassifizierungseinheit erkannt wird, ob und an welchen Positionen des Spitzenhalters Pipettierspitzen angeordnet sind; und
wobei in dem mehrstufigen Klassifizeriungsverfahren durch die Klassifizierungeinheit (11) ferner ermittelt wird, in welchen vorhandenen Pipettierspitzen eine Flüssigkeit, welche Flüssigkeit und mit welchem Füllstand befindlich ist.

2. Verfahren nach einem der vorangehenden Ansprüche,
**dadurch gekennzeichnet,**
**dass** zur Bestimmung des zumindest einen Auswertebereichs eine Auswertung der optischen Abbildungseigenschaften der Abbildungseinheit (5) und extrinsischer Kalibrierungsdaten bezüglich der Abbildungseinheit (5) verwendet werden.

3. Verfahren nach einem der vorangehenden Ansprüche,
**dadurch gekennzeichnet,**
**dass** das Ausgabesignal verwendet wird, um eine bekannte Laborroutine der Laboreinrichtung (4) zu identifizieren und/oder zu überwachen und/oder zu protokollieren.

4. Verfahren nach einem der vorangehenden Ansprüche,
**dadurch gekennzeichnet,**
**dass** das Ausgangssignal verwendet wird, um eine Ähnlichkeit zu einer bekannten Laborroutine, insbesondere samt der Abweichungen von der bekannten Laborroutine der Laboreinrichtung (4), zu identifizieren und, insbesondere, um eine die Ähnlichkeit, bevorzugt auch die Abweichung, betreffende Benutzerausgabe zu generieren.

5. System zur automatischen Erkennung von Laborarbeitsgegenständen und deren Zustand, im Bereich einer Mehrzahl von Sollablagepositionen (2) eines Laborarbeitsbereiches (3) mit:
- einer Abbildungseinheit (5) zum Erzeugen einer einzelnen zweidimensionalen Abbildung eines labortechnischen Arbeitsbereichs (3), wobei der Arbeitsbereich (3) eine matrixförmige Anordnung von Sollablagepositionen (2) umfasst;
- einer Identifizierungseinheit (9) zum Identifizieren zumindest eines ersten Auswertebereichs in der zweidimensionalen Abbildung, wobei der zumindest eine Auswertebereich im Bereich einer Sollablageposition (2) des Arbeitsbereichs (3) angeordnet und abgebildet ist;
- einer Aufbereitungseinheit (10) zur Aufbereitung der Abbildung zu einer Klassifikationsvorstufe hinsichtlich Zuschnitts auf die Abbildung des Auswertebereichs und/oder Formatierung der Abbildung des Auswertebereichs;
- einer Klassifizierungseinheit (11) zur automatischen Gegenstandserkennung auf der Grundlage der Klassifikationsvorstufe unter Anwendung zumindest eines Klassifikationsverfahrens auf der Basis einer Featuregenerierung und einer anschließenden Zuordnung zu einer Gegenstandsklasse mit den durch die Featuregenerierung generierten Features der Klassifikationsvorstufe mit einem auf die Gegenstandserkennung trainierten Satz von Operatoren, wobei die Featuregenerierung auf der Basis von händisch erzeugten und/oder maschinell gelernten Auswahlkriterien durch künstliche Neuronale-Netzwerke erfolgt und/oder die Zuordnung der generierten Feature zu einer Gegenstandsklasse auf der Basis von künstlichen Neuronalen-Netzwerken erfolgt;
- einer Ausgabeeinheit zur Erzeugung eines den erkannten Gegenstand identifizierenden Ausgabesignals;
- einer Kommunikationseinheit (8) zum Übermitteln des Ausgabesignals an eine Laboreinrichtung (4) des Systems (1) zur Berücksichtigung des erkannten Gegenstandes bei der Abarbeitung einer Laborroutine der Laboreinrichtung (4), nämlich einer Ansteuerung eines Roboterarms; wobei
die Klassifizierungseinheit (11) eine Neuronale-Netzwerk-Einheit (111) umfasst, mit der im Rahmen des Klassifikationsverfahren zumindest ein mehrstufiges Klassifikationsverfahren auf der Basis einer zumindest in einer Stufe stattfindenden Faltung der Bildinhalte der Klassifikationsvorstufe mit einem auf die Gegenstandserkennung trainierten Satz von Operatoren, nämlich Faltungsoperatoren, durchführbar ist;
wobei bei Anwendung des mehrstufigen Klassifikationsverfahrens zunächst in den ersten Stufen des künstlichen neuronalen Netzwerkes ein Gegenstand gemäß einer ersten groben Gegenstandsklasse erkannt wird und mit fortschreitenden Stufen jeweils feinere Strukturen durch die jeweilige Stufe erkannt werden und im Anschluss daran mit jeweils nachfolgend durchgeführten Klassifikationsverfahren seitens der Klassifizierungseinheit (11) entsprechend zueinander kaskadierte oder verschachtelte Unterklassen des Gegenstands erkannt werden;
wobei die Abbildung Farbinformationen in einzelnen Farbkanälen, und bevorzugt Helligkeitsinformationen in einem Helligkeitskanal, umfasst, wobei im Rahmen der automatischen Gegenstanderkennung zumindest die Farbinformationen der einzelnen Kanäle der Featuregenerierung unterzogen werden, wobei insbesondere die Kanäle einzeln untersucht und die Ergebnisse der Untersuchung zur Featuregenerierung zusammengefasst werden; wobei die Unterklassen durch die Definition der trainierten Operatoren derart detailliert ausgebildet sind, dass neben dem Gegenstand auch ein Gegenstandszustand erkannt wird; wobei das jeweils nachfolgende Klassifikationsverfahren auf einem kaskadiert oder verschachtelt angeordneten Teilauswertebereich des zumindest einen ersten Auswertebereichs bearbeitet;
wobei in einer ersten Stufe des mehrstufigen Klassifikationsverfahrens eine Gegenstandsklasse Spitzenhalter erkannt wird;
wobei durch Auswahl eines oder mehrerer Teilauswertebereiche in dem mehrstufiten Klassifikationsverfahren durch die Klassifizierungseinheit erkannt wird, ob und an welchen Positionen des Spitzenhalters Pipettierspitzen angeordnet sind; und
wobei in dem mehrstufigen Klassifizeriungsverfahren durch die Klassifizierungeinheit (11) ferner ermittelt wird, in welchen vorhandenen Pipettierspitzen eine Flüssigkeit, welche Flüssigkeit und mit welchem Füllstand befindlich ist.

6. System nach einem der Systemansprüche,
**gekennzeichnet durch**
eine Identifizierungs- (9) und/oder Protokoll- und/oder Überwachungseinheit, mit der anhand des Ausgabesignals eine bekannte Laborroutine der Laboreinrichtung (4) identifiziert und/oder überwacht und/oder zu protokolliert wird.

7. System nach einem der Systemansprüche,
**gekennzeichnet durch**
eine Benutzerschnittstelle (20) mit der anhand des Ausgabesignals eine identifizierte Ähnlichkeit zu einer bekannten Laborroutine, insbesondere samt der identifizierten Abweichungen von der bekannten Laborroutine der Laboreinrichtung (4), in Form einer Benutzerausgabe kommuniziert wird.

## Claims

1. Method for operating a system (1) for automatically detecting laboratory workpieces and their condition, in particular for a workpiece carrier (1) with a plurality of workpiece holders (2) and a plurality of sensors (3) for detecting the workpieces, wherein the workpiece carrier (
the area of a plurality of target storage positions (2) of a laboratory work area (3), comprising the steps of:
- generating a single two-dimensional image of a laboratory work area (3) with an imaging unit (5) for generating two-dimensional images, wherein the work area (3) comprising a matrix-like arrangement of target storage positions (2);
- Identifying at least one first evaluation area in the two-dimensional image with an identification unit (9) of the system (1), wherein the at least one evaluation area is located in the area of a target storage position (2) of the work area (3) and is mapped;-processing the image with a processing unit (10) of the system (1) to a classification preliminary stage with regard to cutting to size for the image of the evaluation area and/or formatting the image of the evaluation area;
- Automatic object recognition based on the classification preliminary stage using at least one classification method based on feature generation and subsequent assignment to an object class with the features generated by the feature generation using a classification unit (11) of the system (1)
- Generation of an output signal identifying the detected object by means of an output unit,
- transmitting the output signal to a laboratory device (4) of the system (1) with a communication unit (8) of the system (1), and taking the detected object into account in the Processing of a laboratory routine of the laboratory facility (4), namely the control of a robot arm;
wherein the feature generation is based on manually generated and/or machine-learned selection criteria by artificial
artificial neural networks and/or the assignment of the generated features to an object class is performed on the basis of artificial neural networks;
wherein the at least one classification method comprises at least one multi-stage classification method based on at least one convolution of the image contents of the classification preliminary stage with a set of operators trained for object recognition,
namely convolution operators, with a neural network unit (111) takes place in one stage;
whereby, when applying the multi-stage classification procedure , an object is first recognized in the first stages of the artificial neural network according to a first rough object class, and with each subsequent stage, finer structures are recognized by the respective stage, and then, with each subsequent classification methods performed by the classification unit (11), subclasses of the object are recognized that are cascaded or nested in relation to each other;
wherein the image represents color information in individual color channels, and preferably brightness information in a brightness channel,
wherein, in the context of automatic object recognition, at least the color information of the individual channels is subjected to feature generation, wherein the channels are examined individually and the results of the examination are combined for feature generation;
wherein the subclasses are formed in such detail by the definition of the trained operators that, in addition to the object, an object state is also recognized;
wherein the respective subsequent classification process is based on a cascaded or nested sub-evaluation area of the at least one first evaluation area;
wherein, in a first stage of the multi-stage classification process, an object class "tip holder" is recognized;
wherein, by selecting one or more partial evaluation areas in the multi-stage classification process, the classification unit recognizes whether and at which positions of the tip holder pipette tips are arranged; and
wherein, in the multi-stage classification method, the classification unit (11) in the pipette tip holder.

2. Method according to one of the preceding claims,
**characterized in that**
that, in order to determine the at least one evaluation area, an evaluation of the optical imaging properties of the imaging unit (5) and extrinsic calibration data relating to the imaging unit (5) is used.

3. Method according to one of the preceding claims,
characterized
that the output signal is used to identify and/or activate a known laboratory routine of the laboratory device (4).
monitor and/or log a known laboratory routine of the laboratory facility

4. Method according to one of the preceding claims, **characterized in that** that the output signal is used to determine a similarity to a known laboratory routine, in particular including the deviations from the known laboratory routine of the laboratory facility (4), and, in particular, to generate a user output relating to the similarity, preferably also the deviation.

5. System for automatic recognition of laboratory work items and their status in the area of a plurality of target storage positions (2) of a laboratory work area (3), comprising:
- an imaging unit (5) for generating a single two-dimensional image of a laboratory work area (3), wherein the work area (3) comprises a matrix-like arrangement of target storage positions (2);
- an identification unit (9) for identifying at least one first evaluation area in the two-dimensional image, wherein the at least one evaluation area is arranged in the area of a target placement position (2) of the work area (3) and is mapped;
- a processing unit (10) for processing the image into a classification preliminary stage with regard to cropping to the image of the evaluation area and/or formatting the image of the evaluation area;
- a classification unit (11) for automatic object recognition based on the classification preliminary stage using at least one classification method based on feature generation and subsequent assignment to an object class with the features generated by the feature generation with a set of operators trained for object recognition, wherein the feature generation is performed on the basis of manually generated and/or machine-learned selection criteria by artificial neural networks and/or the assignment of the generated features to an object class is performed on the basis of artificial neural networks. networks;
- an output unit for generating an output signal identifying the recognized object;
- a communication unit (8) for transmitting the output signal to a laboratory facility (4) of the system (1) for taking the recognized object into account when processing a laboratory routine of the laboratory device (4), namely a control signal for a robot arm; wherein
the classification unit (11) comprises a neural network unit (111) with which, within the framework of the classification process at least a multi-stage classification process can be carried out on the basis of at least one stage of convolution of the image content of the classification pre-stage with a set of operators trained for object recognition, namely convolution operators;
where, when the multi-stage classification method is used, an object is first recognized in the first stages of the artificial neural network according to a first rough object class, and with each subsequent stage, finer structures are recognized by the respective stage
and subsequently, subclasses of the object that are cascaded or nested relative to one another are recognized by means of classification methods performed in succession by the classification unit (11);
wherein the image represents color information in individual color channels, and preferably brightness information in a brightness channel,
wherein, in the context of automatic object recognition, at least the color information of the individual channels is subjected to feature generation, wherein, in particular, the channels are examined individually and the results of the
examination are combined for feature generation; wherein the subclasses are formed in such detail by the definition of the trained operators that, in addition to the object, an object state is also recognized;
wherein the respective subsequent classification process is based on a cascaded or nested sub-evaluation area of the at least one first evaluation area;
wherein, in a first stage of the multi-stage classification process, an object class "tip holder" is recognized;
wherein, by selecting one or more sub-evaluation areas in the multi-stage classification method by the classification unit, it is recognized whether and at which positions of the tip holder pipette tips are arranged; and
wherein, in the multi-stage classification method, the classification unit (11) in the multi-stage classification process, it is also determined in which of the pipette tips present a liquid is present, which liquid is present and at what fill level.

6. System according to one of the system claims,
**characterized by**
an identification (9) and/or logging and/or monitoring unit, which uses the output signal to identify and/or monitor and/or log a known laboratory routine of the laboratory device (4).

7. System according to one of the system
claims, **characterized by**
a user interface (20) with which, based on the output signal, an identified similarity to a known laboratory routine,
in particular including the identified deviations from the known laboratory routine of the laboratory facility (4), in the form of a user output.

## Revendications

1. Procédé pour faire fonctionner un système (1) destiné à la reconnaissance automatique d'objets de laboratoire et de leur état, dans
zone d'une pluralité de positions de rangement (2) d'une zone de travail de laboratoire (3), comprenant les étapes suivantes :
- génération d'une image bidimensionnelle unique d'une zone de travail de laboratoire (3) à l'aide d'une unité d'imagerie (5) pour générer des images bidimensionnelles, I' zone de travail (3) comprenant un agencement matriciel de positions de dépôt souhaitées (2) ;
- identification d'au moins une première zone d'évaluation dans la représentation bidimensionnelle à l'aide d'une unité d'identification (9) du système (1), la au moins une zone d'évaluation se trouvant dans la zone d'une position de dépôt souhaitée (2) de la zone de travail (3) et est représentée ; - traitement de la représentation, à l'aide d'une unité de traitement (10) du système (1), en une étape préliminaire de classification en vue de l'adaptation à la représentation de la zone d'évaluation et/ou du formatage de la représentation de la zone d'évaluation ;
- reconnaissance automatique d'objets sur la base de l'étape préliminaire de classification en utilisant au moins un procédé de classification basé sur une génération de caractéristiques et une attribution ultérieure à une classe d'objets avec les caractéristiques générées par la génération de caractéristiques à l'aide d'une unité de classification (11) du système (1)
- Génération d'un signal de sortie identifiant l'objet détecté au moyen d'une unité de sortie,
- Transmission du signal de sortie à un dispositif de laboratoire (4) du système (1), avec une unité de communication (8) du système (1), et prise en compte de l'objet détecté lors de la Exécution d'une routine de laboratoire de l'installation de laboratoire (4), à savoir la commande d'un bras robotisé ;
la génération de caractéristiques étant effectuée sur la base de critères de sélection générés manuellement et/ou appris par des machines à l'aide de l'intelligence artificielle
réseaux neuronaux artificiels et/ou l'affectation des caractéristiques générées à une classe d'objets sur la base de réseaux neuronaux artificiels ;
le procédé de classification au moins unique étant au moins un procédé de classification à plusieurs niveaux sur la base d'au moins convolution, à une étape, du contenu des images de l'étape de classification préliminaire avec un ensemble d'opérateurs, à savoir des opérateurs de convolution, entraînés pour la reconnaissance d'objets, avec une unité de réseau neuronal (111) ;
en appliquant la procédure de classification à plusieurs niveaux d'abord, dans les premiers niveaux du réseau neuronal artificiel, un objet est reconnu selon une première classe d'objets approximative et, à mesure que les niveaux progressent, des structures de plus en plus fines sont reconnues par le niveau correspondant, puis, à l'aide de procédés de classification effectués successivement par l'unité de classification (11), des sous-classes de l'objet, cascadées ou imbriquées les unes dans les autres, sont reconnues ;
l'image représentant des informations de couleur dans des canaux de couleur individuels et, de préférence, des informations de luminosité dans un canal de luminosité,
dans le cadre de la reconnaissance automatique d'objets, au moins les informations de couleur des différents canaux sont soumises à la génération de caractéristiques, les canaux étant examinés individuellement et les résultats de l'examen étant regroupés pour la génération de caractéristiques ;
les sous-classes étant formées de manière détaillée par la définition des opérateurs entraînés, de telle sorte qu'outre l'objet, un état de l'objet soit également reconnu ;
le processus de classification suivant étant basé sur un zone d'évaluation partielle disposée en cascade ou imbriquée de la au moins une première zone d'évaluation ;
dans lequel, dans une première étape du procédé de classification à plusieurs niveaux, une classe d'objets « porte-pointes » est reconnue ;
la sélection d'une ou plusieurs zones d'évaluation partielle dans le procédé de classification à plusieurs niveaux par l'unité de classification permettant de reconnaître si des embouts de pipette sont disposés sur le porte-embouts et à quelles positions ; et
dans lequel, dans le procédé de classification à plusieurs niveaux, l'unité de classification détermine si et à quelles positions du porte-embouts des embouts de pipette sont unité de classification (11) détermine en outre dans quelles pointes de pipette existantes se trouve un liquide, de quel liquide il s'agit et quel est son niveau de remplissage.

2. Procédé selon l'une des revendications précédentes,
**caractérisé en ce que**
qu'une évaluation des propriétés de reproduction optique de l'unité de reproduction (5) et des données d'étalonnage extrinsèques relatives à l'unité de reproduction (5) est utilisée pour déterminer la au moins une zone d'évaluation.

3. Procédé selon l'une des revendications précédentes,
**caractérisé en ce que**
**en ce que** le signal de sortie est utilisé pour identifier et/ou enregistrer une routine de laboratoire connue de l'installation de laboratoire (4). et/ou pour enregistrer une routine de laboratoire connue de l'installation de laboratoire (4).

4. Procédé selon l'une des revendications précédentes,
**caractérisé en ce que**
que le signal de sortie est utilisé pour établir une similitude avec une routine de laboratoire connue, en particulier y compris les écarts de la routine de laboratoire connue de l'installation de laboratoire (4), et en particulier pour générer une sortie utilisateur concernant la similitude, de préférence également la déviation.

5. Système pour la reconnaissance automatique d'objets de laboratoire et de leur état, dans la zone d'une pluralité de positions de rangement nominales (2) d'une zone de travail de laboratoire (3), comprenant :
- une unité de reproduction (5) pour générer une reproduction bidimensionnelle unique d'une zone de travail technique de laboratoire (3), la zone de travail (3) comportant un agencement matriciel de positions de rangement nominales (2) ;
- une unité d'identification (9) pour identifier au moins une première zone d'évaluation dans l'image en deux dimensions, la au moins une zone d'évaluation étant disposée dans la zone d'une position de dépôt souhaitée (2) de la zone de travail (3) et ;
- une unité de traitement (10) pour traiter l'image en une étape préliminaire de classification en vue de la découpe sur l'image de la zone d'évaluation et/ou du formatage de l'image de la zone d'évaluation ;
- une unité de classification (11) pour la reconnaissance automatique d'objets sur la base de l'étape préliminaire de classification en utilisant au moins un procédé de classification basé sur une génération de caractéristiques et une attribution ultérieure à une classe d'objets avec les caractéristiques générées par la génération de caractéristiques générées par la génération de caractéristiques de la phase préliminaire de classification avec un ensemble d'opérateurs formés pour la reconnaissance d'objets, la la génération de caractéristiques s'effectue sur la base de critères de sélection créés manuellement et/ou appris automatiquement par des réseaux neuronaux artificiels et/ou l'attribution des caractéristiques générées à une classe d'objets s'effectue sur la base de réseaux neuronaux artificiels. réseaux neuronaux artificiels ;
- d'une unité de sortie pour générer un signal de sortie identifiant l'objet reconnu ;
- une unité de communication (8) pour transmettre le signal de sortie à un équipement de laboratoire (4) du système (1) pour prise en compte de l'objet reconnu lors du traitement d'une routine de laboratoire de l'installation de laboratoire (4), à savoir une commande d'un bras robotisé ; l'unité de classification (11)
l'unité de classification (11) comprend une unité de réseau neuronal (111) avec laquelle, dans le cadre du procédé de classification au moins un procédé de classification à plusieurs niveaux peut être mis en œuvre sur la base d'une convolution, effectuée au moins à un niveau, du contenu des images de l'étape de classification préliminaire à l'aide d'un ensemble d'opérateurs, à savoir des opérateurs de convolution, entraînés à la reconnaissance d'objets ;
lors de l'application du procédé de classification à plusieurs niveaux, un objet est d'abord reconnu dans les premiers niveaux du réseau neuronal artificiel selon une première classe d'objets approximative, puis, à mesure que les niveaux avancent, des structures de plus en plus fines sont reconnues par le niveau correspondant puis, à l'aide de procédés de classification effectués ensuite par l'unité de classification (11), des sous-classes de l'objet, cascadées ou imbriquées les unes par rapport aux autres, sont reconnues ;
l'image représentant des informations de couleur dans des canaux de couleur individuels, et de préférence des informations de luminosité dans un canal de luminosité,
dans le cadre de la reconnaissance automatique d'objets, au moins les informations de couleur des différents canaux sont soumises à la génération de caractéristiques, les canaux étant notamment examinés individuellement et les résultats de la analyse sont regroupés pour la génération de caractéristiques ; les sous-classes étant formées de manière détaillée par la définition des opérateurs entraînés, de telle sorte qu'outre l'objet, un état de l'objet soit également reconnu ;
le processus de classification suivant étant basé sur un traite une zone d'évaluation partielle en cascade ou imbriquée de la au moins une première zone d'évaluation ;
dans lequel, dans une première étape du procédé de classification à plusieurs niveaux, une classe d'objets « porte-pointes » est reconnue ;
la sélection d'une ou plusieurs zones d'évaluation partielle dans le procédé de classification à plusieurs niveaux par l'unité de classification permettant de reconnaître si et à quelles positions du porte-embouts sont disposés des embouts de pipette ; et
dans lequel, dans le procédé de classification à plusieurs niveaux, l'unité de classification détermine si et à quelles positions du porte-embouts des embouts de pipetage unité de classification (11) détermine en outre dans quelles pointes de pipette existantes se trouve un liquide, quel est ce liquide et quel est son niveau de remplissage.

6. Système selon l'une des revendications,
**caractérisé par**
d'une unité d'identification (9) et/ou d'enregistrement et/ou de surveillance qui, à l'aide du signal de sortie, identifie et/ou surveille et/ou enregistre une routine de laboratoire connue de l'installation de laboratoire (4).

7. Système selon l'une des revendications
précédentes, **caractérisé par**
une interface utilisateur (20) avec laquelle, à l'aide du signal de sortie, une similitude identifiée avec une routine de laboratoire connue,
en particulier avec les écarts identifiés par rapport à la routine de laboratoire connue de l'installation de laboratoire (4), sous la forme d'une sortie utilisateur.
